# EUROPEAN PATENT APPLICATION

(11) **EP 4 454 602 A1**
(43) Date of publication of application: **30.10.2024**
(21) Application number: 22910802.2
(22) Date of filing: 30.11.2022
(51) Int. Cl.: A61C 17/02, H01M 50/247, H01M 50/271

(54) **ORAL CAVITY CLEANING DEVICE**

(30) Priority: 24.12.2021 JP 2021211295
(71) Applicant: Panasonic Intellectual Property Management Co., Ltd., Kadoma-shi, Osaka 571-0057 (JP)
(72) Inventor: NAKASAKI, Shintaro, Kadoma-shi, Osaka 571-0057 (JP)
(74) Representative: Grünecker Patent- und Rechtsanwälte PartG mbB
(86) International application number: PCT/JP2022/044278
(87) International publication number: WO 2023/120085

(57) **Abstract**

The present disclosure provides an oral cavity cleaning device capable of more easily replacing a battery. The oral cavity cleaning device according to the present disclosure includes a body having a housing space in which a battery is housed, battery cover (12) configured to close an opening of the housing space, and seal member (19) configured to seal a gap between battery cover (12) and the body. Battery cover (12) includes cover body (16) rotatably attached to the body. Battery cover (12) can be switched between an attachment state in which the opening of the housing space is closed and sealed with seal member (19) and a non-attachment state in which sealing with seal member (19) is released and battery cover (12) can be removed from the body by rotating cover body (16). Cover body (16) includes operation rib (1612) on which a finger can be hooked to switch between the attachment state and the non-attachment state of battery cover (12).

## Description

### TECHNICAL FIELD

The present disclosure relates to an oral cavity cleaning device.

### BACKGROUND ART

As disclosed in PTL 1, an oral cavity cleaning device driven by a battery built in a device body has been conventionally known.

### Citation List

### Patent Literature

PTL 1: Unexamined Japanese Patent Publication No. 2011-200424

### SUMMARY OF THE INVENTION

### Technical problem

When a dry battery is used to drive such an oral cavity cleaning device, the battery is preferably to be more easily replaceable. Similarly, even when a rechargeable battery identical in shape to a dry battery and compatible with the dry battery (referred to below as a rechargeable battery in a shape of a dry battery) is used, the battery is preferably to be more easily replaceable.

It is thus an object of the present disclosure to provide an oral cavity cleaning device capable of replacing a battery more easily.

### Solution to problem

An oral cavity cleaning device according to an aspect of the present disclosure is a battery replaceable device driven by a battery that is replaceable, the oral cavity cleaning device including: a body having a housing space in which the battery is housed; a battery cover that closes an opening of the housing space; and a seal member that seals a gap between the battery cover and the body. The battery cover includes a cover body that is rotatably attached to the body, and the cover body is rotated to switch between an attachment state in which the seal member seals the gap between the battery cover and the body while closing the opening of the housing space and a non-attachment state in which sealing the gap between the battery cover and the body using the seal member is released and the battery cover is detachable from the body. The battery cover includes a terminal that is attached to the cover body and is in contact with the battery in the attachment state to be electrically connected to the battery, and the cover body includes an operation rib capable of performing a switching operation between the attachment state and the non-attachment state of the battery cover by being hooked by a finger.

### Advantageous effect of invention

The present disclosure enables providing an oral cavity cleaning device capable of more easily replacing a battery.

### BRIEF DESCRIPTION OF THE DRAWINGS

Fig. 1 is a diagram schematically illustrating an oral cavity cleaning device according to the present exemplary embodiment.
Fig. 2 is a side view illustrating a state where a device body of the oral cavity cleaning device according to the present exemplary embodiment is housed in a tank.
Fig. 3 is a side view illustrating the oral cavity cleaning device according to the present exemplary embodiment in a state where engagement of the oral cavity cleaning device in a housed state is released.
Fig. 4 is a side view illustrating a state where a device body of the oral cavity cleaning device according to the present exemplary embodiment is pulled out from a tank.
Fig. 5 is a sectional view of the oral cavity cleaning device according to the present exemplary embodiment, the sectional view illustrating a state where a device body of the oral cavity cleaning device is housed in a tank while a part of the oral cavity cleaning device is not illustrated.
Fig. 6 is a sectional view of the oral cavity cleaning device according to the present exemplary embodiment, the sectional view illustrating a state where a device body of the oral cavity cleaning device is pulled out from a tank while a part of the oral cavity cleaning device is not illustrated.
Fig. 7 is a perspective view illustrating a tank of the oral cavity cleaning device according to the present exemplary embodiment.
Fig. 8 is a perspective view of a device body of the oral cavity cleaning device according to the present exemplary embodiment as viewed from above in one direction.
Fig. 9 is a perspective view of a device body of the oral cavity cleaning device according to the present exemplary embodiment as viewed from above in another direction.
Fig. 10 is a perspective view of a device body of the oral cavity cleaning device according to the present exemplary embodiment as viewed from below.
Fig. 11 is a diagram illustrating a back surface of a device body of the oral cavity cleaning device according to the present exemplary embodiment.
Fig. 12 is a side view illustrating a device body of the oral cavity cleaning device according to the present exemplary embodiment, and illustrating a lower end of the device body inverted in an enlarged manner.
Fig. 13 is a diagram illustrating a device body of the oral cavity cleaning device according to the present exemplary embodiment, and is a perspective view of the device body with a battery cover in an open state as viewed from below.
Fig. 14 is a diagram illustrating a device body of the oral cavity cleaning device according to the present exemplary embodiment, and is a diagram illustrating a back surface of the device body with a battery cover in an open state.
Fig. 15 is a side view illustrating a device body of the oral cavity cleaning device according to the present exemplary embodiment, and illustrating a lower end of the device body in an enlarged manner in a state where the device body with a battery cover in an open state is inverted.
Fig. 16 is a perspective view illustrating a device body of the oral cavity cleaning device according to the present exemplary embodiment, and illustrating a lower end of the device body in an enlarged manner in a state where the device body in which a battery cover is removed is inverted.
Fig. 17 is a perspective view of a battery cover of the oral cavity cleaning device according to the present exemplary embodiment as viewed from inside.
Fig. 18 is a perspective view of a battery cover of the oral cavity cleaning device according to the present exemplary embodiment as viewed from outside.
Fig. 19 is a plan view illustrating a battery cover of the oral cavity cleaning device according to the present exemplary embodiment.
Fig. 20 is a diagram illustrating a back surface of a battery cover of the oral cavity cleaning device according to the present exemplary embodiment.
Fig. 21 is a side view illustrating a battery cover of the oral cavity cleaning device according to the present exemplary embodiment.
Fig. 22 is a side view illustrating a cover body of the oral cavity cleaning device according to the present exemplary embodiment.
Fig. 23 is a side view illustrating a battery base of the oral cavity cleaning device according to the present exemplary embodiment.
Fig. 24 is a plan view illustrating a battery base of the oral cavity cleaning device according to the present exemplary embodiment.
Fig. 25 is an enlarged perspective view illustrating a back side of a battery base of the oral cavity cleaning device according to the present exemplary embodiment.
Fig. 26 is a side view illustrating a leaf spring of the oral cavity cleaning device according to the present exemplary embodiment.
Fig. 27 is a diagram illustrating a battery housing of the oral cavity cleaning device according to the present exemplary embodiment, and is a partially enlarged sectional view illustrating a state where a battery is inserted in a normal position and a battery cover is attached.
Fig. 28 is a diagram illustrating a battery housing of the oral cavity cleaning device according to the present exemplary embodiment, and is a partially enlarged sectional view illustrating a state where a battery is inserted in a reverse position and a battery cover is attached.
Fig. 29 is a diagram illustrating a battery housing of the oral cavity cleaning device according to the present exemplary embodiment, and is a partially enlarged sectional view illustrating a state where a battery and a battery cover are removed.
Fig. 30 is a diagram schematically illustrating an example of an engagement groove formed in a battery housing of the oral cavity cleaning device according to the present exemplary embodiment.
Fig. 31 is a diagram schematically illustrating a first modification of an engagement groove formed in a battery housing of the oral cavity cleaning device according to the present exemplary embodiment.
Fig. 32 is a diagram schematically illustrating a second modification of an engagement groove formed in a battery housing of the oral cavity cleaning device according to the present exemplary embodiment.
Fig. 33 is a diagram schematically illustrating a third modification of an engagement groove formed in a battery housing of the oral cavity cleaning device according to the present exemplary embodiment.
Fig. 34 is a diagram illustrating a device body of the oral cavity cleaning device according to the present exemplary embodiment, and is a diagram illustrating a back surface of the device body in a state where the battery cover is in a half-open state without protruding from a large-diameter part of the device body.
Fig. 35 is a diagram illustrating a device body of the oral cavity cleaning device according to the present exemplary embodiment, and is a diagram illustrating a back surface of the device body in a state where the battery cover is in a half-open state and protrudes from a large-diameter part of the device body.
Fig. 36 is a side view illustrating an oral cavity cleaning device according to a modification.

### DESCRIPTION OF EMBODIMENT

Hereinafter, an exemplary embodiment will be described in detail with reference to the drawings. However, detailed description more than necessary may not be described. For example, detailed description of already well-known matters and duplicated description of substantially identical elements may not be described.

The accompanying drawings and the following description are only presented to help those skilled in the art fully understand the present disclosure and are not intended to limit the subject matters described in the scope of claims.

The exemplary embodiment below will be described with a vertical direction defined such that a nozzle is positioned above when an oral cavity cleaning device is disposed.

### (Exemplary embodiment)

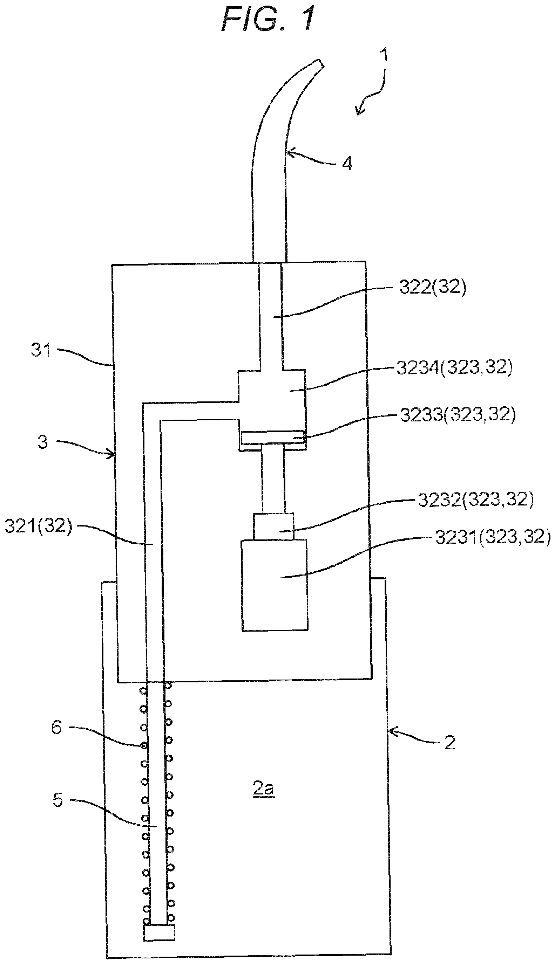

Fig. 1 is a diagram schematically illustrating oral cavity cleaning device 1 according to the present exemplary embodiment. As illustrated in Fig. 1, oral cavity cleaning device 1 according to the present exemplary embodiment includes tank 2, device body 3, and nozzle 4.

Tank 2 is formed in a bottomed tubular shape that is open upward and has a lower end closed, and reservoir 2a capable of storing liquid is formed inside tank 2. Although water is available as the liquid stored in reservoir 2a, the liquid is not limited to water, and various liquids are available. For example, a washing liquid in which a cleaning agent is mixed in water is available.

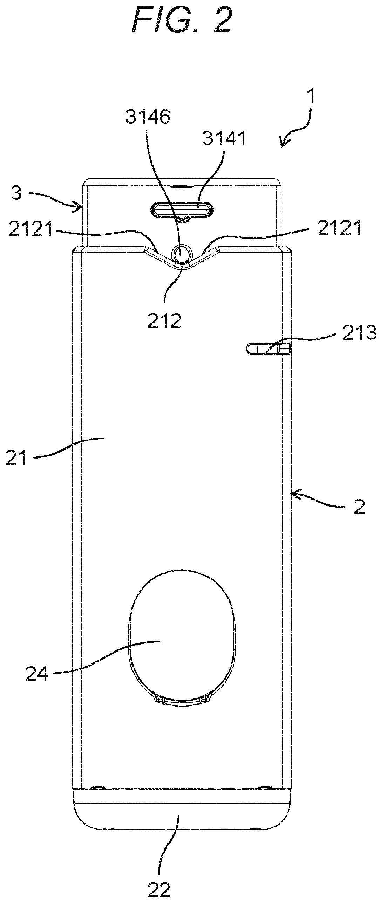

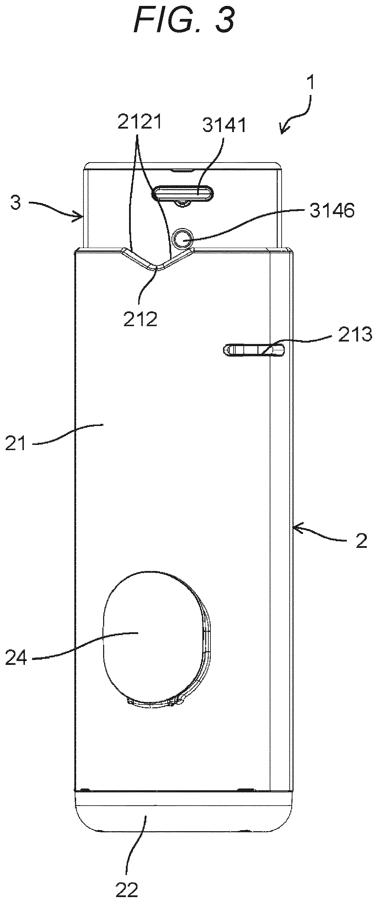

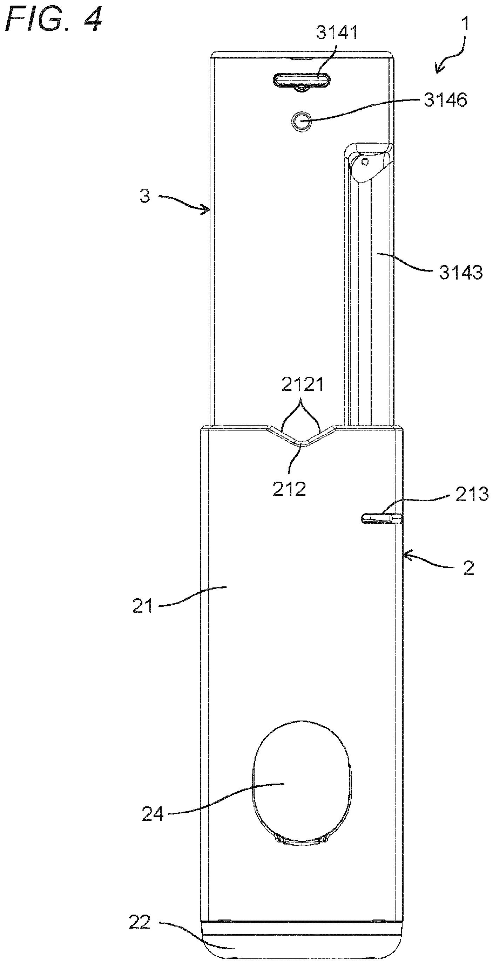

Fig. 2 is a side view illustrating a state where device body 3 of oral cavity cleaning device 1 according to the present exemplary embodiment is housed in tank 2. Fig. 3 is a side view illustrating oral cavity cleaning device 1 according to the present exemplary embodiment in a state where engagement of the oral cavity cleaning device in a housed state is released. Fig. 4 is a side view illustrating a state where device body 3 of oral cavity cleaning device 1 according to the present exemplary embodiment is pulled out from tank 2. As illustrated in Figs. 2 to 4, device body 3 is supported in tank 2 in a slidable manner in a vertical direction (i.e., a longitudinal direction of device body 3) in the present exemplary embodiment. At this time, device body 3 is supported in tank 2 in a slidable manner in a state of having at least a lower end disposed in reservoir 2a.

Then, sliding device body 3 downward in tank 2 to store device body 3 in tank 2 as illustrated in Fig. 2 enables oral cavity cleaning device 1 to be housed in a more compact state when oral cavity cleaning device 1 is not used. Alternatively, sliding device body 3 upward in tank 2 to pull out device body 3 to above tank 2 as illustrated in Fig. 4 enables more liquids to be supplied to reservoir 2a of tank 2. Then, nozzle 4 is attached to device body 3 in a state where device body 3 is pulled out to above tank 2, and a liquid is supplied to reservoir 2a of tank 2, and thus enabling oral cavity cleaning device 1 to be used.

As described above, oral cavity cleaning device 1 according to the present exemplary embodiment is an oral cavity cleaning device with a telescopic tank, the oral cavity cleaning device including device body 3 supported by tank 2 in a slidable manner between a housed state in which device body 3 is housed in tank 2 and a pulled-out state in which device body 3 is pulled out from tank 2. That is, when oral cavity cleaning device 1 is not in use, device body 3 can be housed in tank 2 by being pushed into tank 2 after nozzle 4 is removed from device body 3. Then, oral cavity cleaning device 1 can be used by pulling out device body 3 from tank 2 and attaching nozzle 4 to device body 3.

Device body 3 is detachably supported by tank 2 in the present exemplary embodiment, so that device body 3 can be removed from tank 2 by pulling device body 3 upward. Then, pressing device body 3 downward in a state where a lower end part of device body 3 is inserted into tank 2 enables device body 3 to be attached to tank 2.

Tank 2 is made of a polypropylene resin or the like to be able to be cleaned by a dishwasher, and is formed in the shape of a transparent or translucent container to improve design properties. Tank 2 is also formed with a horizontal cross-sectional shape of a perfect circle so that device body 3 can be relatively rotated.

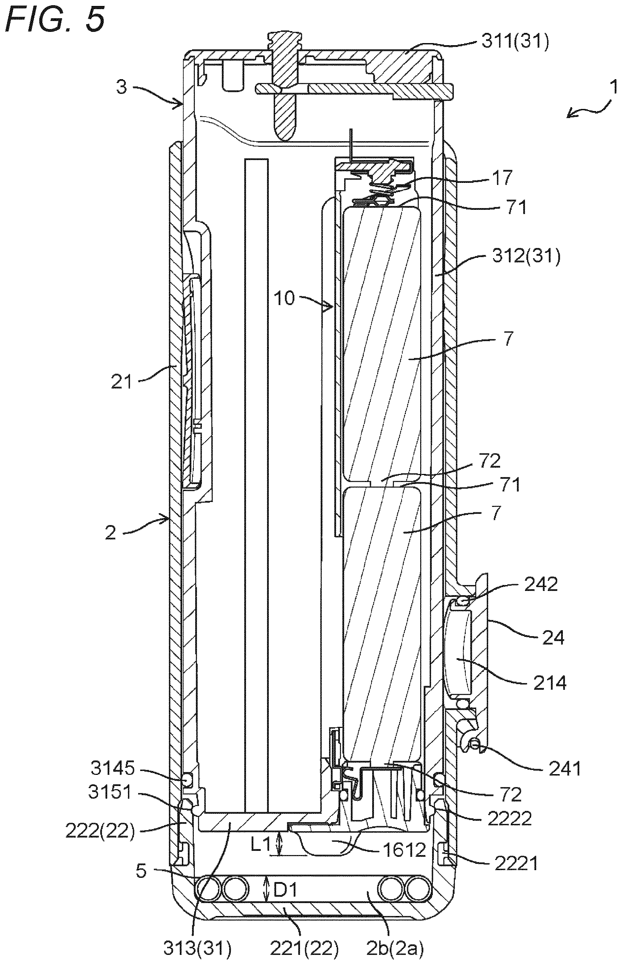

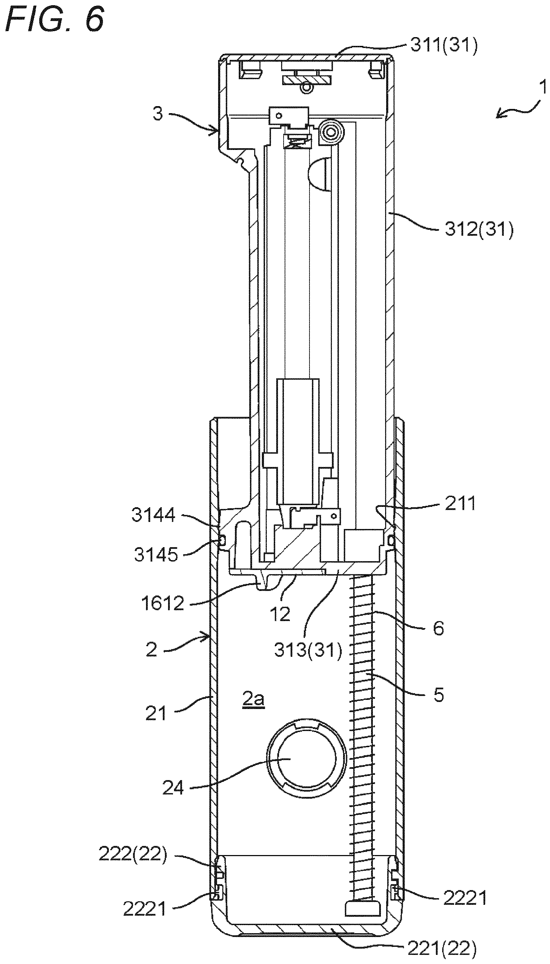

Fig. 5 is a sectional view illustrating a state where device body 3 of oral cavity cleaning device 1 according to the present exemplary embodiment is housed in tank 2 while a part of oral cavity cleaning device 1 is not illustrated. Fig. 6 is a sectional view illustrating a state where device body 3 of oral cavity cleaning device 1 according to the present exemplary embodiment is pulled out from tank 2 while a part of oral cavity cleaning device 1 is not illustrated. As illustrated in Figs. 5 and 6, tank 2 in the present embodiment includes tubular body 21 in a substantially cylindrical shape that is open vertically, and bottom wall 22 that is detachably attached to tubular body 21 with a closed lower opening. When bottom wall 22 of tank 2 is configured to be detachable from tubular body 21 as described above, a liquid in reservoir 2a can be discharged without detaching device body 3 from tank 2.

Bottom wall 22 includes bottom wall body 221 in a substantially disk shape, and peripheral wall 222 that extends upward from an outer peripheral edge of the bottom wall body and is detachably attached to tubular body 21. Examples of a method for attaching and detaching bottom wall 22 as described above to and from tubular body 21 includes a method for providing screw structure in peripheral wall 222 and tubular body 21 to relatively rotate tubular body 21 and bottom wall 22. Here, peripheral wall 222 in the present exemplary embodiment has a height that is set to allow a finger of a user or the like to reach a bottom surface (i.e., an upper surface of bottom wall body 221: inner surface) in a state where bottom wall 22 is removed from tubular body 21. This configuration enables the inner surface of tank 2 to be cleaned without using a long cleaning brush or the like.

Between tubular body 21 and peripheral wall 222, packing 2221 as a seal member is disposed. Packing 2221 is detachably attached to a groove formed in an outer peripheral surface of peripheral wall 222 continuously in a circumferential direction. When bottom wall 22 is attached to tubular body 21 in a state where peripheral wall 222 is inserted inside tubular body 21, packing 2221 is brought into close contact with tubular body 21 and bottom wall 22. This configuration allows a space between tubular body 21 and bottom wall 22 to be sealed by packing 2221 as a seal member. Alternatively, the space between tubular body 21 and bottom wall 22 may be sealed by providing a groove in an inner peripheral surface of tubular body 21 and detachably attaching packing in the groove.

As illustrated in Figs. 5 and 6, device body 3 includes housing 31 constituting an outer shell of device body 3. Housing 31 is formed in a tubular shape with closed opposite ends in the vertical direction. Housing 31 (i.e., one element of device body 3) is also formed with a cross-sectional shape of a perfect circle so as to be rotatable relative to tank 2.

Thus, housing 31 in the present exemplary embodiment includes top wall 311 in a substantially disk shape, peripheral wall 312 in a substantially cylindrical shape extending downward from an outer peripheral edge of top wall 311, and bottom wall 313 in a substantially disk shape provided to close a lower opening of peripheral wall 312.

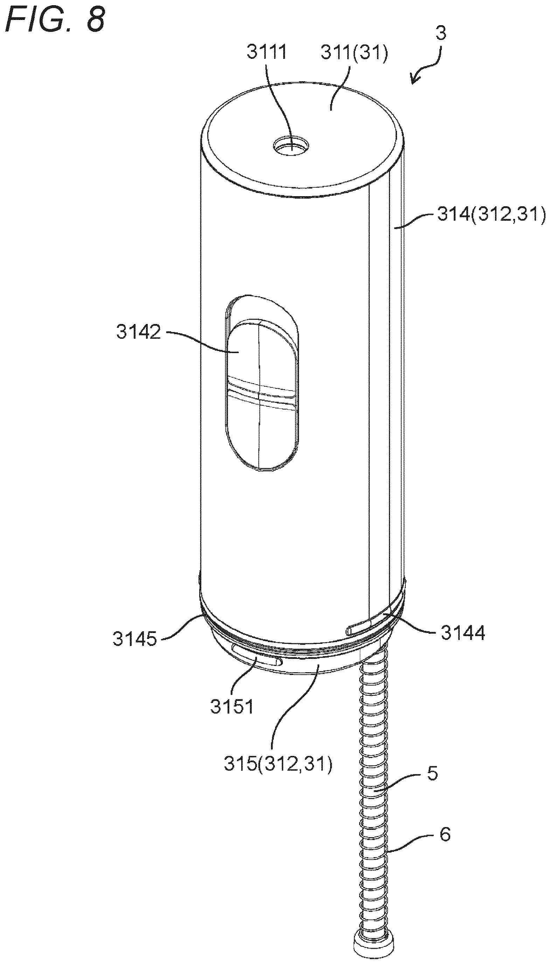

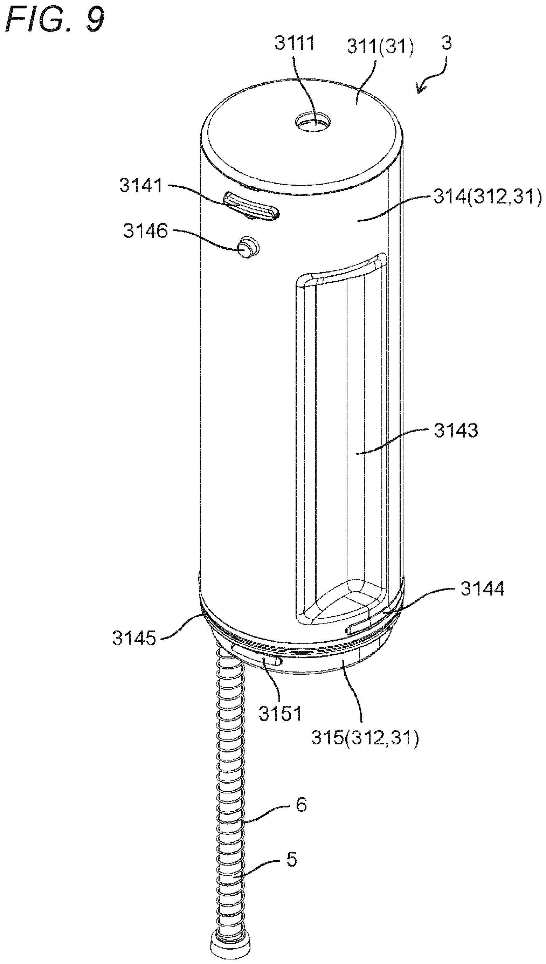

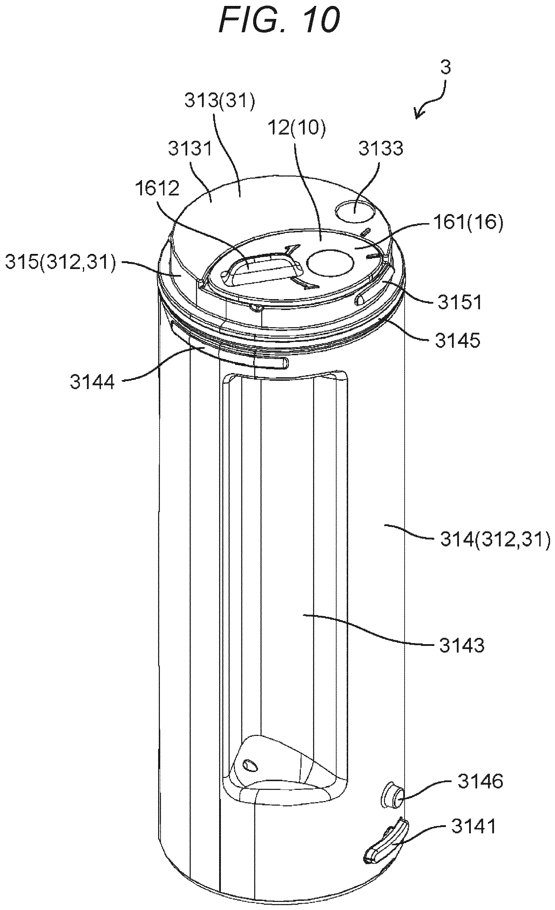

Fig. 8 is a perspective view of device body 3 of oral cavity cleaning device 1 according to the present exemplary embodiment as viewed from above in one direction. Fig. 9 is a perspective view of device body 3 of oral cavity cleaning device 1 according to the present exemplary embodiment as viewed from above in another direction. Fig. 10 is a perspective view of device body 3 of oral cavity cleaning device 1 according to the present exemplary embodiment as viewed from below. As illustrated in Figs. 8 and 9, top wall 311 is provided with nozzle attachment part 3111 that is formed in a hollow elongated shape to detachably attach nozzle 4 capable of discharging (i.e., ejecting) a liquid from its distal end. On the other hand, bottom wall 313 is provided with tube attachment part 3133 to which tube 5 is attached, as illustrated in Fig. 10.

In the present exemplary embodiment, tube 5 is integrally attached to tube attachment part 3133, and is configured to be disposed in reservoir 2a of tank 2 when device body 3 is attached to tank 2 in a slidable manner. A liquid stored in reservoir 2a is introduced into housing 31 (i.e., one element of device body 3) through tube 5.

As illustrated in Fig. 6, coil spring 6 that holds an attitude extending in a length direction of tube 5 is disposed around tube 5. Disposing coil spring 6 as described above around tube 5 enables tube 5 to be wound without being bent when device body 3 is housed in tank 2, and thus enables tube 5 to be housed tidily in tank 2. Disposing coil spring 6 around tube 5 also enables tube 5 to be neatly extended from the wound state when device body 3 is pulled out from tank 2.

As illustrated in Fig. 1, housing 31 (i.e., one element of device body 3) is provided inside with flow path 32 through which a liquid introduced through tube 5 can pass and be supplied to nozzle 4. In the present exemplary embodiment, Flow path 32 is provided inside housing 31 (i.e., one element of device body 3) so as to have one end communicating with an inner space of nozzle attachment part 3111 and another end communicating with an inner space of tube attachment part 3133. This configuration allows the liquid introduced through tube 5 to be supplied to nozzle 4 through flow path 32.

Flow path 32 includes suction path 321 disposed upstream of flow path 32 and discharge path 322 disposed downstream of flow path 32 in the present exemplary embodiment. Suction path 321 and discharge path 322 are connected via pump 323. When pump 323 is operated, the liquid in reservoir 2a is sucked up through tube 5 and passes through flow path 32 to be discharged (i.e., ejected) from the distal end of nozzle 4.

Pump 323 includes motor 3231, cam 3232, piston 3233, and pump chamber 3234. Motor 3231 is driven by electric power supplied from battery 7 (such as a dry battery or a rechargeable battery in the shape of a dry battery) which is housed in device body 3.

Cam 3232 is a member that converts rotation of motor 3231 into an axial operating force, and piston 3233 is a member that reciprocates along the vertical direction of device body 3 by the axial operating force converted by cam 3232. An end of piston 3233 is disposed in pump chamber 3234, and pump chamber 3234 has a volume that is changed by the reciprocation of piston 3233. Pump chamber 3234 communicates with suction path 321 and discharge path 322 provided inside device body 3. Between pump chamber 3234 and suction path 321, a suction valve (not illustrated) is provided, and a discharge valve (not illustrated) is provided between pump chamber 3234 and discharge path 322.

When piston 3233 is moved in a direction of increasing the volume of pump chamber 3234 by driving of motor 3231, the liquid in tank 2 flows into pump chamber 3234 through tube 5 and suction path 321. After that, when piston 3233 is moved in a direction of reducing the volume of pump chamber 3234 in a state where the liquid has flowed into pump chamber 3234, the liquid in pump chamber 3234 is supplied to nozzle 4 through discharge path 322. The liquid supplied to nozzle 4 is then discharged (i.e., ejected) from the distal end of nozzle 4 to the outside.

As described above, oral cavity cleaning device 1 is driven by battery 7 in the present exemplary embodiment.

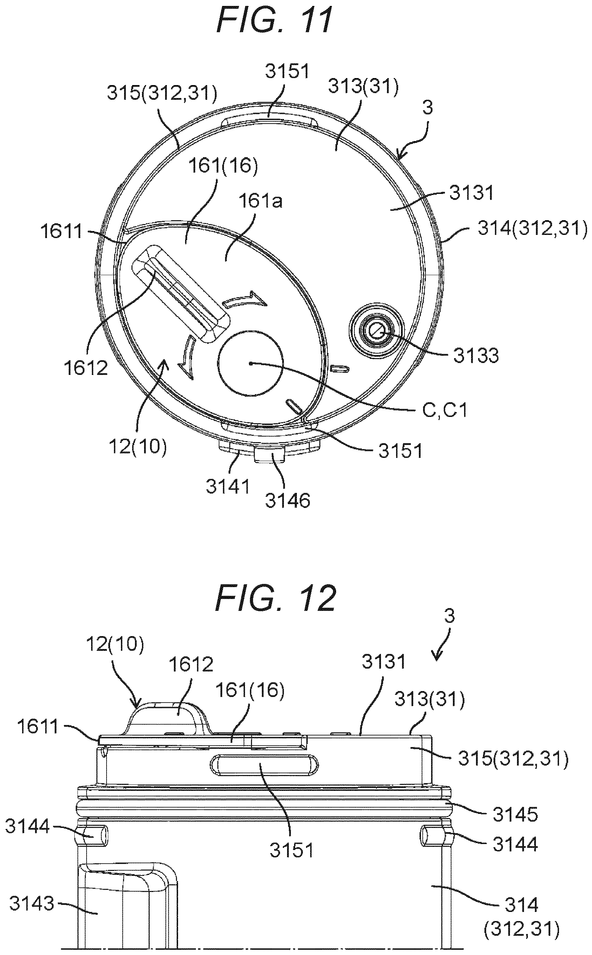

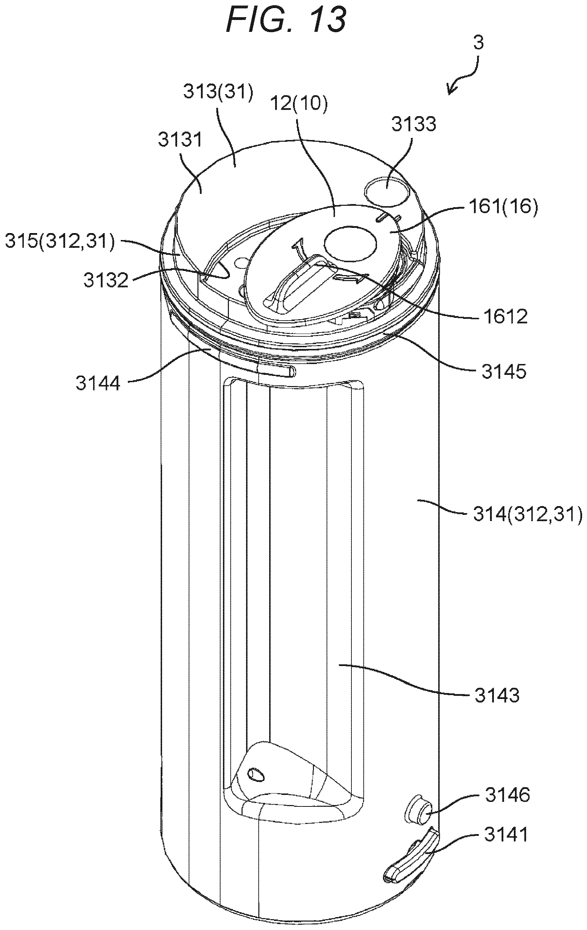

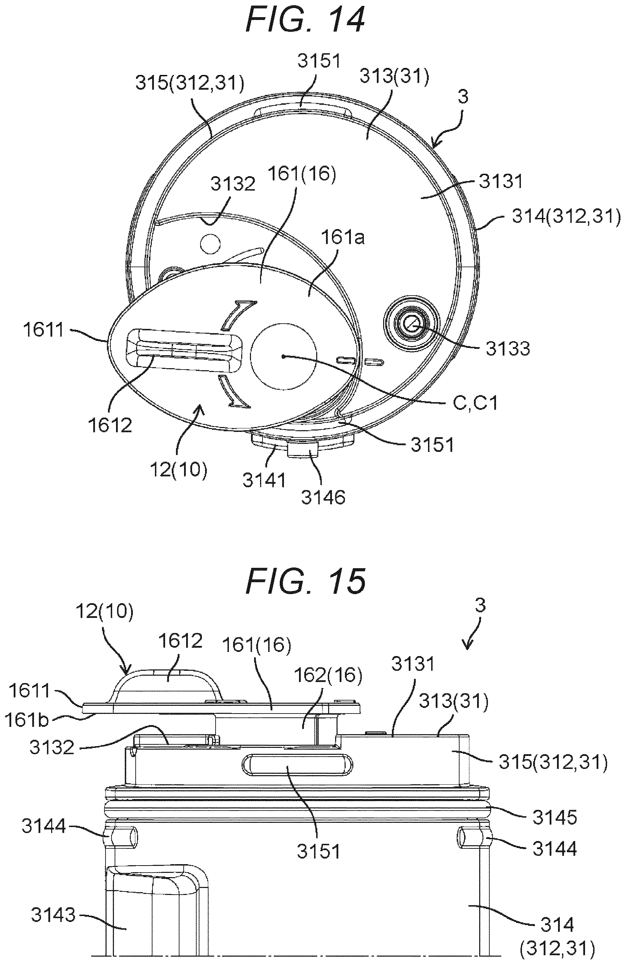

Fig. 11 is a diagram illustrating a back surface of device body 3 of oral cavity cleaning device 1 according to the present exemplary embodiment. Figs. 12 to 15 are each a diagram illustrating device body 3 of oral cavity cleaning device 1 according to the present exemplary embodiment. Fig. 12 is an enlarged side view illustrating a lower end of device body 3 inverted. Fig. 13 is a perspective view of device body 3 with battery cover 12 in an open state as viewed from below. Fig. 14 is a diagram illustrating a back surface of device body 3 with battery cover 12 in an open state. Fig. 15 is an enlarged side view illustrating a lower end of device body 3 with battery cover 12 in an open state, device body 3 being inverted. As illustrated in Figs. 8 to 15, peripheral wall 312 includes large-diameter part 314 having a relatively large diameter, and small-diameter part 315 having a smaller diameter than large-diameter part 314 and being connected to a lower end of large-diameter part 314. Small-diameter part 315 is formed only on the lower end of peripheral wall 312 in the present embodiment, and thus most of peripheral wall 312 is large-diameter part 314.

As illustrated in Fig. 10, large-diameter part 314 is provided in its upper end part with button 3141 that can be pressed inward, and when button 3141 is pressed, nozzle 4 can be detached from housing 31 (i.e., one element of device body 3). As illustrated in Fig. 8, large-diameter part 314 is provided with power supply switch 3142 for starting or stopping oral cavity cleaning device 1 (i.e., switching between on and off states of a power supply).

Further, as illustrated in Fig. 9, large-diameter part 314 further includes nozzle housing 3143 in the shape of a groove shape formed in a height direction of device body 3, nozzle housing 3143 being capable of housing nozzle 4. When oral cavity cleaning device 1 is not used, nozzle 4 can also be housed in tank 2 by pushing device body 3 into tank 2 in a state where nozzle 4 is removed from device body 3 is housed in nozzle housing 3143. This configuration enables nozzle 4 detached from device body 3 to be handled together with device body 3, so that nozzle 4 can be easily managed.

As illustrated in Figs. 2 to 4, tubular body 21 of tank 2 has a side surface with an upper part including drying hole 213 passing through a peripheral wall of tubular body 21 in the present exemplary embodiment, and drying hole 213 is disposed facing nozzle housing 3143 of device body 3 in a state where device body 3 is housed in tank 2. This configuration enables nozzle 4 housed in nozzle housing 3143 to be dried more efficiently. Drying hole 213 is disposed facing a bottom wall of nozzle housing 3143 of device body 3 in a state where device body 3 is pulled out from tank 2. This configuration enables a liquid accumulated in nozzle housing 3143 during use of oral cavity cleaning device 1 to be discharged through drying hole 213.

In the present exemplary embodiment, large-diameter part 314 is also formed with an outer diameter slightly smaller than an inner diameter of tubular body 21, so that large-diameter part 314 can be slid up and down inside reservoir 2a of tank 2 (i.e., inside tubular body 21). In contrast, small-diameter part 315 is formed with an outer diameter slightly smaller than an inner diameter of peripheral wall 222 of bottom wall 22, so that small-diameter part 315 is inserted into peripheral wall 222 of bottom wall 22 in a state where device body 3 is housed in tank 2.

When device body 3 is brought into a pulled-out state in which device body 3 is pulled out from tank 2, device body 3 and tank 2 are locked to prevent device body 3 from being housed in tank 2 during use of oral cavity cleaning device 1. Similarly, when device body 3 is brought into a housed state in which device body 3 is housed in tank 2, device body 3 and tank 2 are locked to prevent device body 3 from being pulled out from tank 2.

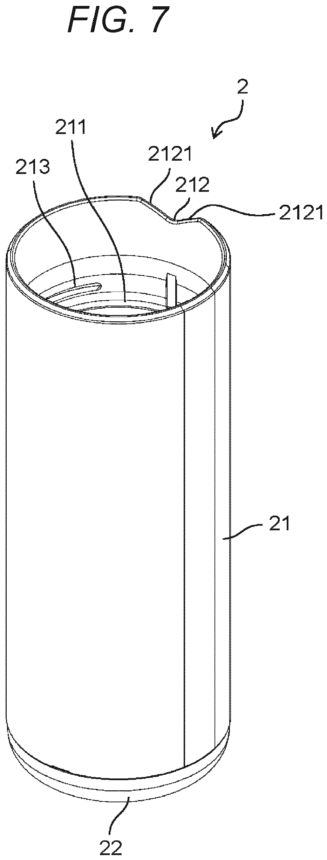

Specifically, large-diameter part 314 is provided at a lower end on its outer periphery with pull-out protrusion 3144 protruding outward in the radial direction, as illustrated in Figs. 8 to 15. Fig. 7 is a perspective view illustrating tank 2 of oral cavity cleaning device 1 according to the present exemplary embodiment. As illustrated in Fig. 7, tubular body 21 of the tank 2 is provided at an upper end on its inner periphery with pull-out recess 211 releasably engaged with pull-out protrusion 3144. When device body 3 is pulled out from tank 2, pull-out protrusion 3144 and pull-out recess 211 are engaged with each other, and thus device body 3 is held in tank 2 in a pulled-out state, as illustrated in Fig. 6.

In the present exemplary embodiment, pull-out protrusion 3144 is formed extending in the circumferential direction of large-diameter part 314, and a plurality of (two in the present exemplary embodiment) pull-out protrusions 3144 is provided in the circumferential direction. On the other hand, pull-out recess 211 is formed continuously in the circumferential direction of tubular body 21, and can be engaged with the plurality of pull-out protrusions 3144.

In the present exemplary embodiment, Pull-out protrusions 3144 are each provided at a position overlapping with tank 2 in front view in a state where device body 3 is attached to tank 2. This configuration causes pull-out protrusions 3144 to be prevented from being exposed from tank 2 in front view in a state where device body 3 is attached to tank 2, and thus enables design properties to be enhanced by hiding unnecessary unevenness.

In addition, large-diameter part 314 is provided in a lower end of its outer periphery with a groove formed continuously in the circumferential direction throughout its circumference, and packing 3145 as a seal member is detachably attached to the groove. When device body 3 is attached to tank 2, packing 3145 is brought into close contact with large-diameter part 314 and tubular body 21. This configuration allows a space between housing 31 (i.e., one element of device body 3) and tubular body 21 to be sealed by packing 3145 as a seal member. Alternatively, the space between housing 31 (i.e., one element of device body 3) and tubular body 21 may be sealed by providing a groove in an inner peripheral surface of tubular body 21 and detachably attaching packing in the groove.

As illustrated in Figs. 8 to 15, small-diameter part 315 is provided on its outer periphery with housing protrusion 3151 protruding outward in the radial direction. As illustrated in Fig. 5, peripheral wall 222 of bottom wall 22 is provided in its inner periphery with housing recess 2222 releasably engaged with housing protrusion 3151. When device body 3 is housed in tank 2, housing protrusion 3151 and housing recess 2222 are engaged with each other, and thus device body 3 is held in tank 2 in a housed state.

Housing protrusion 3151 is formed extending in the circumferential direction of small-diameter part 315 in the present exemplary embodiment, and a plurality of (two in the present exemplary embodiment) housing protrusions 3151 is provided in the circumferential direction. On the other hand, housing recess 2222 is formed in peripheral wall 222 in the circumferential direction to have a circumferential length longer than housing protrusion 3151, and a plurality of (two in the present exemplary embodiment) housing recesses 2222 is provided in the circumferential direction.

This configuration causes housing protrusion 3151 and housing recess 2222 to be engaged with each other when device body 3 is housed in tank 2, and thus enables device body 3 to be held at a housing position with respect to tank 2. At this time, tube 5 is housed between device body 3 and tank 2 in a state of being wound multiple times as illustrated in Fig. 5. As described above, when device body 3 is in a housed state in the present exemplary embodiment, a space (i.e., reservoir 2a) formed between a lower surface of device body 3 and an upper surface of bottom wall 22 of tank 2 can be effectively used as tube housing space 2b for housing tube 5.

Tube housing space 2b formed in a housed state of device body 3 preferably has a height larger than diameter D1 (i.e., a tube diameter) of tube 5. This configuration enables tube 5 housed in a state of being wound multiple times to be prevented from being crushed by device body 3 in the housed state of device body 3.

In the present exemplary embodiment, housing protrusion 3151 is also provided overlapping with tank 2 in front view in a state where device body 3 is attached to tank 2. This configuration causes housing protrusions 3151 to be prevented from being exposed from tank 2 in front view in a state where device body 3 is attached to tank 2, and thus enables design properties to be enhanced by hiding unnecessary unevenness.

However, when housing protrusion 3151 is prevented from being exposed from tank 2 in front view in a state where device body 3 is attached to tank 2, an engagement state and a disengagement state between housing protrusion 3151 and housing recess 2222 are less likely to be visually recognized even when tank 2 is made transparent. Thus, in the present exemplary embodiment, tank 2 includes a marked part (see marked protrusion 3146 and a marked recess which will be described below) by which an engagement state between housing protrusion 3151 and housing recess 2222 can be checked, the marked part being provided at a place visible from the outside as illustrated in Figs. 2 to 4.

Specifically, large-diameter part 314 is provided at an upper end of its outer periphery with marked protrusion 3146 that protrudes radially outward, and tubular body 21 is provided at its upper end with marked recess 212 that engages with marked protrusion 3146 when housing protrusion 3151 and housing recess 2222 are engaged with each other. The user or the like can visually recognize an engagement state between marked protrusion 3146 and marked recess 212 to recognize that housing protrusion 3151 and housing recess 2222 are engaged with each other.

Marked recess 212 in the present exemplary embodiment further includes inclined surfaces 2121 that are inclined upward from a bottom part configured to engage with marked protrusion 3146, and that are provided on respective sides in the circumferential direction across the bottom part. This configuration causes marked protrusion 3146 to move while sliding along corresponding one of inclined surfaces 2121 when device body 3 is rotated relative to tank 2 to release engagement between housing protrusion 3151 and housing recess 2222. That is, device body 3 in a housed state is rotated relative to tank 2 to move marked protrusion 3146 along the corresponding one of inclined surfaces 2121, so that device body 3 is moved upward to come out of tank 2. Thus, this configuration enables disengagement between housing protrusion 3151 and housing recess 2222 to be assisted by inclined surfaces 2121.

When marked protrusion 3146 finishes moving along the corresponding one of inclined surfaces 2121, marked protrusion 3146 is disposed at an opening edge of tubular body 21. Thus, it can be recognized that the engagement between housing protrusion 3151 and housing recess 2222 is released. As described above, in the present exemplary embodiment, the user or the like can recognize that engagement between housing protrusion 3151 and housing recess 2222 is released by visually recognizing disengagement between marked protrusion 3146 and marked recess 212.

In the present exemplary embodiment, a liquid is allowed to be supplied to reservoir 2a in tank 2 even when tank 2 is disposed sideways.

Specifically, tank 2 is provided in its side part (i.e., tubular body 21) with liquid supply hole 214 through which a liquid can be injected into reservoir 2a as illustrated in Fig. 5. Liquid supply hole 214 is disposed to be located below packing 3145 when device body 3 is pulled out from tank 2. Liquid supply hole 214 is also disposed to be located above packing 3145 when device body 3 is housed in tank 2. This configuration prevents liquid supply hole 214 from interfering with packing 3145, and thus enables sealability of packing 3145 to be maintained. In this way, liquid supply hole 214 is configured to be closed by liquid supply lid 24.

In the present exemplary embodiment, liquid supply lid 24 includes a closing part having a larger outer diameter than liquid supply hole 214. The closing part has a contour formed as curved surfaces on respective sides in the vertical direction and formed as straight track ellipses on respective sides in a horizontal direction. The closing part has an outer surface curved along a side surface shape of tank 2, so that design properties can be enhanced.

As illustrated in Fig. 5, liquid supply lid 24 is attached to tank 2 using hinge 241 to be openable in the vertical direction, and packing 242 as a seal member is detachably attached between liquid supply hole 214 and liquid supply lid 24. When liquid supply lid 24 closes liquid supply hole 214, liquid supply hole 214 and liquid supply lid 24 are sealed by packing 242.

In the present exemplary embodiment, an end of liquid supply lid 24 is disposed within a range of a side surface of tank 2 in front view in a state where liquid supply lid 24 is opened. In other words, the end part opposite to hinge 241 of liquid supply lid 24 is disposed at a position without protruding from a lower end of the side surface of tank 2 in front view when liquid supply lid 24 is opened. This configuration enables the end part of liquid supply lid 24 to be prevented from interfering with a peripheral member when liquid supply lid 24 is opened, and thus enables suppressing influence on hinge 241.

As described above, oral cavity cleaning device 1 according to the present exemplary embodiment is driven by battery 7. Thus, oral cavity cleaning device 1 includes battery housing 10 in which battery 7 is housed.

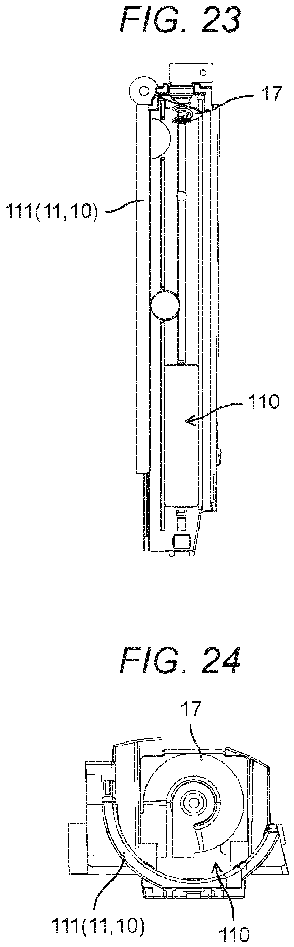

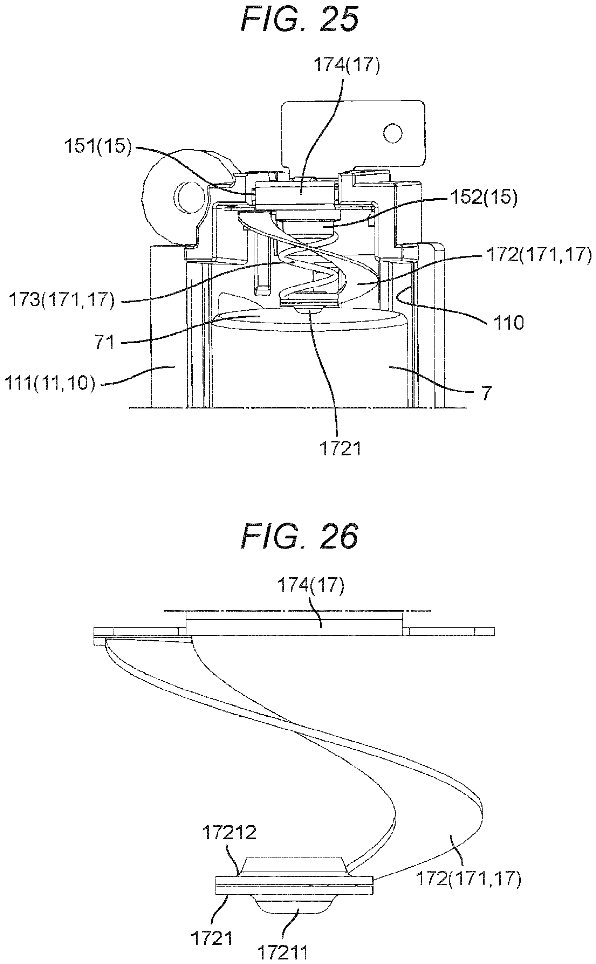

As illustrated in Fig. 5, device body 3 includes battery housing 10, and battery housing 10 includes body 11 provided in housing 31, in the present exemplary embodiment. In the present exemplary embodiment, body 11 includes battery base 111 that is disposed inside housing 31 and is capable of holding battery 7 (typically, see Figs. 23 and 25), and a part facing battery 7 held by battery base 111 in housing 31. Housing space 110 in which battery 7 can be housed (typically, see Figs. 23 and 25) is formed inside body 11. That is, a space defined by battery base 111 and the part facing battery 7 held by battery base 111 in housing 31 serve as housing space 110 capable of housing battery 7. As described above, housing space 110 is formed inside housing 31, and battery 7 is incorporated in housing 31, in the present exemplary embodiment.

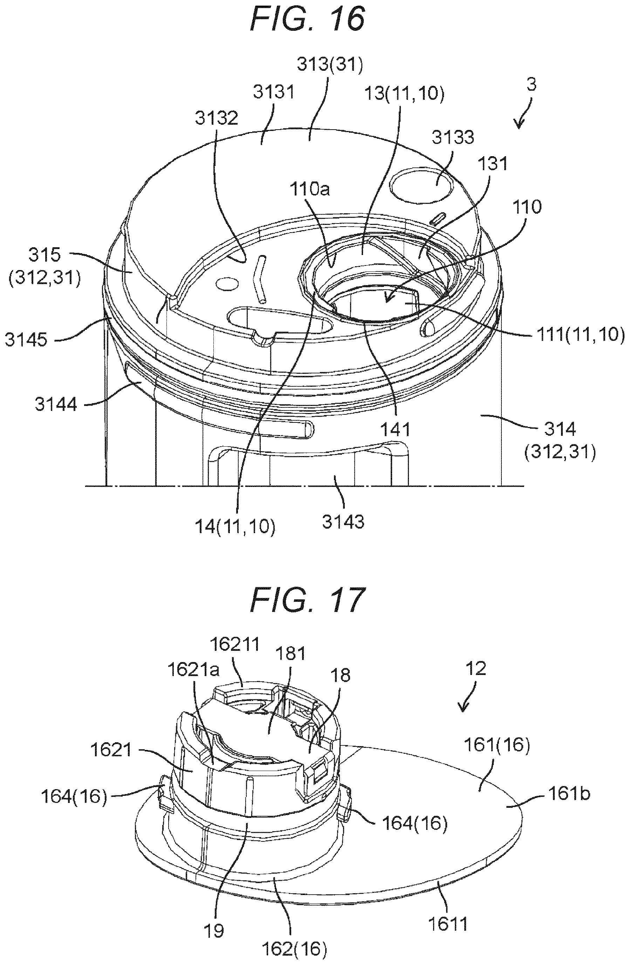

Fig. 16 is a perspective view illustrating device body 3 of oral cavity cleaning device 1 according to the present exemplary embodiment, and illustrating a lower end of device body 3 in an enlarged manner in a state where device body 3 in which battery cover 12 is removed is inverted. As illustrated in Fig. 16, in the present exemplary embodiment, housing space 110 is formed to be open downward when oral cavity cleaning device 1 is placed in a normal state (i.e., in a state where device body 3 is not inverted). That is, housing space 110 is formed passing through bottom wall 313 of housing 31 in the vertical direction, and an opening formed in bottom surface 3131 of bottom wall 313 serves as opening 110a of housing space 110.

When battery 7 is inserted into housing space 110 from below opening 110a (i.e., from below bottom wall 313), battery 7 is incorporated in housing 31. As illustrated in Fig. 5, two batteries 7 are disposed in housing 31 (strictly in housing space 110) in a state of being aligned on a straight line in the vertical direction with their longitudinal directions substantially aligning with the vertical direction, in the present exemplary embodiment. As described above, housing space 110 elongated in the vertical direction is formed in housing 31 in the present exemplary embodiment. This configuration causes battery housing 10 to be reduced in size and space in the radial direction, and thus enables the space in housing 31 to be more effectively utilized. Two batteries 7 are connected in series in the present exemplary embodiment. That is, two batteries 7 are held on battery base 111 (typically, see Figs. 23 and 25) in housing 31 in a state where negative electrode 71 of one battery 7 is in contact with positive electrode 72 of another battery 7.

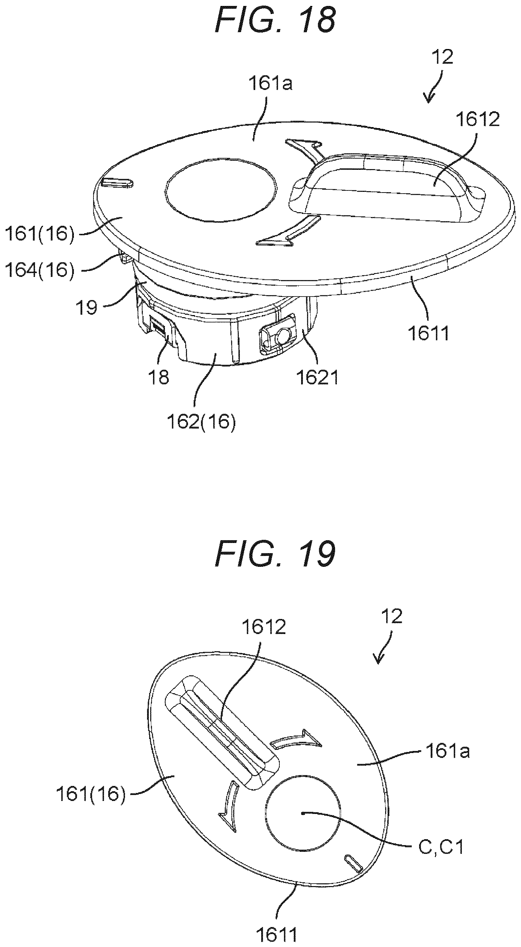

Fig. 17 is a perspective view of battery cover 12 of oral cavity cleaning device 1 according to the present exemplary embodiment as viewed from inside. Fig. 18 is a perspective view of battery cover 12 of oral cavity cleaning device 1 according to the present exemplary embodiment as viewed from outside. As illustrated in Figs. 17 and 18, in the present exemplary embodiment, battery housing 10 further includes battery cover 12 that closes opening 110a of housing space 110. Battery cover 12 is detachably attached to body 11, and battery 7 can be taken in and out at the time of replacement or the like by removing battery cover 12 from body 11. As described above, oral cavity cleaning device 1 according to the present exemplary embodiment is a battery-replaceable device capable of replacing battery 7 as a drive source.

In the present exemplary embodiment, battery cover 12 is configured to close housing space 110 that is open downward when oral cavity cleaning device 1 is placed in the normal state, so that battery cover 12 is positioned below body 11 in the normal state of oral cavity cleaning device 1. That is, when battery cover 12 is attached to body 11, battery cover 12 is attached below housing 31 of device body 3 in the normal state of oral cavity cleaning device 1. Additionally, oral cavity cleaning device 1 according to the present exemplary embodiment is an oral cavity cleaning device with a telescopic tank, so that battery cover 12 is housed in tank 2 when tank 2 is attached to device body 3.

In the present exemplary embodiment, as described above, battery cover 12 is positioned below body 11 in the normal state of oral cavity cleaning device 1, so that battery cover 12 is less likely to be visible. Additionally, battery cover 12 is housed in tank 2 when tank 2 is attached to device body 3, so that battery cover 12 can be hidden in tank 2. This configuration improves appearance quality of oral cavity cleaning device 1 to improve design properties of oral cavity cleaning device 1. Battery cover 12 is housed in tank 2 so that dirt (such as food debris) generated during use of oral cavity cleaning device 1 can be prevented from adhering to battery cover 12. Battery cover 12 is housed in tank 2 so that accumulation of dust on battery cover 12 when oral cavity cleaning device 1 is housed (such as when the oral cavity cleaning device is not in use and placed on a wash basin or the like) also can be prevented.

When battery cover 12 is housed in tank 2 in a state where tank 2 is attached to device body 3, nozzle 4 is attached to device body 3 on a side opposite to a side to which battery cover 12 is attached. Thus, during use of oral cavity cleaning device 1, a liquid discharged from nozzle 4 can be prevented from splashing on battery cover 12.

In the present exemplary embodiment, battery cover 12 is provided with an attached terminal (i.e., any one of negative electrode terminal 17 and positive electrode terminal 18, here, positive electrode terminal 18) that is electrically connected to an electrode (i.e., any one of negative electrode 71 and positive electrode 72, here, positive electrode 72) of battery 7. When battery cover 12 is not attached to body 11, there is no energization (i.e., electric power cannot be supplied to motor 3231). Specifically, a terminal electrically connected to an electrode on one side of battery 7 is provided backward (i.e., upward) of body 11, so that the terminal is electrically connected to the electrode on the one side of battery 7 when battery 7 is inserted and held in housing space 110. Fig. 23 is a side view illustrating battery base 111 of oral cavity cleaning device 1 according to the present exemplary embodiment. Fig. 24 is a plan view illustrating battery base 111 of oral cavity cleaning device 1 according to the present exemplary embodiment. As illustrated in Fig. 23, a terminal (negative electrode terminal 17 in Fig. 23) is provided on a wall (i.e., a top wall) on a back side of battery base 111 in the present exemplary embodiment, so that an electrode (here, negative electrode 71) on one side of battery 7 positioned backward (i.e., upward) is brought into contact with a terminal (here, negative electrode terminal 17) in a state where two batteries are held on battery base 111. When battery cover 12 is attached to body 11 in the state, a terminal (here, positive electrode terminal 18) close to battery cover 12 is electrically connected to an electrode (here, positive electrode 72) on the other side of battery 7 on a front side (i.e., a lower side). This configuration enables electric power to be supplied to motor 3231.

By the way, to enable battery 7 to be taken in and out of housing space 110, a clearance to some extent is required to be provided between battery 7 housed in housing space 110 and body 11. Thus, battery 7 housed in housing space 110 can be moved to some extent in the radial direction in housing space 110. When terminals (i.e., negative electrode terminal 17 and positive electrode terminal 18) are electrically connected to battery 7, at least one of the terminals has spring properties to secure contact pressure with battery 7. Here, battery 7 includes negative electrode 71 that has a flat surface, and positive electrode 72 that has a protrusion. That is, battery 7 has parts to be brought into contact with respective terminals, the parts including one part at positive electrode 72 that has a smaller area than the other part at negative electrode 71. Thus, negative electrode terminal 17 typically has spring properties to enable electrical connection and contact pressure to be secured more reliably even when battery 7 is displaced.

For this reason, when negative electrode terminal 17 is to be attached to battery cover 12, negative electrode terminal 17 needs to be increased in size due to necessity to secure electrical connection and contact pressure more reliably.

Reduction in size of spring structure may cause the spring to be fatigued or damaged, so that suppressing the fatigue and damage of the spring requires negative electrode terminal 17 to be further increased in size to increase strength of the spring.

When negative electrode terminal 17 is attached to battery cover 12 as described above, there is a problem that battery cover 12 increases in size.

Thus, positive electrode terminal 18 is attached to battery cover 12 in the present exemplary embodiment to enable reduction in size of battery housing 10 in which battery 7 is housed.

Specifically, battery cover 12 includes only positive electrode terminal 18 out of negative electrode terminal 17 electrically connected to negative electrode 71 of battery 7 and positive electrode terminal 18 electrically connected to positive electrode 72 of battery 7. As described above, in the present exemplary embodiment, battery cover 12 is provided with the terminal connected to battery 7 and without negative electrode terminal 17, and thus is provided with only positive electrode terminal 18.

Body 11 includes negative electrode terminal 17 electrically connected to positive electrode terminal 18 of battery cover 12 through battery 7.

As described above, as illustrated in Fig. 17, in the present exemplary embodiment, battery cover 12 configured to close opening 110a of housing space 110 includes only positive electrode terminal 18 out of negative electrode terminal 17 and positive electrode terminal 18, and negative electrode terminal 17 is provided on body 11 as illustrated in Fig. 23.

This configuration enables suppressing an increase in size of battery cover 12 in the radial direction as compared with when negative electrode terminal 17 is provided in battery cover 12. As described above, battery 7 includes positive electrode 72 with a protrusion, and positive electrode 72 of battery 7 is electrically connected to positive electrode terminal 18 by bringing a tip of the protrusion relatively small is size into contact with positive electrode terminal 18. Thus, even when positional displacement of battery 7 is taken into consideration, energization part 181 of positive electrode terminal 18 only needs to be formed in a central part of housing space 110. That is, energization part 181 of positive electrode terminal 18 can have an area smaller than an area of battery 7 as viewed along the longitudinal direction. In the present exemplary embodiment, positive electrode terminal 18 has an upper end surface serving as energization part 181 that is in contact with positive electrode 72 of battery 7.

This configuration enables not only an opening area of housing space 110 (i.e., an area of opening 110a) to be reduced as much as possible, but also a size of body 11 (i.e., a radial size) to which battery cover 12 is attached to be reduced to downsize battery cover 12. As described above, in the present exemplary embodiment, battery housing 10 can be downsized by attaching positive electrode terminal 18 to battery cover 12.

In the present exemplary embodiment, negative electrode terminal 17 has spring properties. That is, negative electrode terminal 17 includes spring part 171 (see Figs. 25 and 26). Providing spring part 171 on negative electrode terminal 17 as described above enables securing necessary and sufficient contact pressure (i.e., contact pressure between battery 7 and a terminal).

Negative electrode terminal 17 having a spring structure is not provided in the battery cover 12, whereas negative electrode terminal 17 having a spring structure is provided on the back side of housing space 110 formed in body 11. Battery cover 12 is to be positioned below body 11 when oral cavity cleaning device 1 is placed in the normal state.

This configuration allows spring part 171 of negative electrode terminal 17 to be positioned above battery 7 housed in housing space 110 when oral cavity cleaning device 1 is placed in the normal state. This configuration also enables preventing a load of battery 7 from being applied to spring part 171 as much as possible, so that spring part 171 can be prevented from being fatigued. When battery cover 12 is not provided with negative electrode terminal 17 having a spring structure, spring part 171 can be prevented from being detached when battery 7 is replaced.

Fig. 25 is an enlarged perspective view illustrating a back side of battery base 111 of oral cavity cleaning device 1 according to the present exemplary embodiment. As illustrated in Fig. 25, in the present exemplary embodiment, spring part 171 includes leaf spring 172 and coil spring 173. Leaf spring 172 is formed in a spiral shape, and has one end (i.e., an upper end) connected to terminal body 174 fixed to negative electrode terminal holder 15 of body 11. Leaf spring 172 has the other end (i.e., a lower end) provided with battery contact part 1721 that is in contact with negative electrode 71 of battery 7. Coil spring 173 is disposed inside leaf spring 172, which is formed in a spiral shape, to support battery contact part 1721.

In the present embodiment, negative electrode terminal holder 15 is provided on a top wall of battery base 111, and includes attachment part 151 to which terminal body 174 is attached, and boss 152 formed protruding downward at the center of a lower end of attachment part 151. boss 152 supports an upper end of coil spring 173. That is, in the present exemplary embodiment, coil spring 173 has a lower end supporting battery contact part 1721 of leaf spring 172 in a state of having an upper end supported by boss 152.

In the present exemplary embodiment, boss 152 has the amount of downward protrusion that is set to allow battery contact part 1721 to come into contact with boss 152 in a state where coil spring 173 has a length longer than its close contact length. This configuration prevents coil spring 173 from further contracting even when a large load in a contracting direction is applied to spring part 171, such as when battery 7 is inserted reversely or when a device such as oral cavity cleaning device 1 or device body 3 is dropped. That is, when a large load in the contracting direction is applied to spring part 171, contraction of coil spring 173 to the close contact length is restricted by battery contact part 1721 in contact with boss 152. This configuration suppresses plastic deformation of leaf spring 172 and coil spring 173 due to application of a large load in the contracting direction. The close contact length of coil spring 173 is a length when coil spring 173 is most contracted.

In the present exemplary embodiment, as described above, boss 152 has a function as a contraction restricting part that restricts contraction of spring part 171 in a state where coil spring 173 has a length longer than the close contact length. That is, body 11 includes boss 152 as a contraction restricting part that restricts contraction of spring part 171 in a state where coil spring 173 has a length longer than the close contact length. The contraction restricting part does not need to be boss 152 as long as contraction of spring part 171 can be restricted before coil spring 173 contracts to the close contact length. For example, when terminal body 174 is attached to attachment part 151 in such a way that one end (i.e., an upper end) of each of leaf spring 172 and coil spring 173 is positioned backward (i.e., upward) of attachment part 151, battery contact part 1721 can be brought into contact with attachment part 151 before coil spring 173 contracts to the close contact length. In this case, attachment part 151 itself has a function as a contraction restricting part.

Fig. 26 is a side view illustrating leaf spring 172 of oral cavity cleaning device 1 according to the present exemplary embodiment. As illustrated in Fig. 26, battery contact part 1721 is processed for forming a protrusion serving as protrusion 17211 protruding toward battery 7, protrusion 17211 being provided on battery contact part 1721. This configuration enables contact between negative electrode terminal 17 and battery 7 to be further stabilized. Battery contact part 1721 is provided above (i.e., on a side on which coil spring 173 is positioned) with a groove formed by burring, and the groove is engaged with the other end (i.e., a lower end) of coil spring 173. This configuration prevents coil spring 173 from being displaced with respect to leaf spring 172. As described above, in the present exemplary embodiment, battery contact part 1721 (i.e., one element of leaf spring 172) includes positional displacement prevention part 17212 that prevents positional displacement of coil spring 173. This configuration enables separation between leaf spring 172 and coil spring 173 to be more reliably prevented.

Although spring part 171 formed using only coil spring 173 can secure contact pressure with battery 7, using only coil spring 173 increases conductor resistance because coil spring 173 is typically made of iron. Thus, when only coil spring 173 is used, a voltage drop occurs to reduce voltage to be applied to motor 3231, thereby resulting in decrease in output of motor 3231.

For this reason, in the present exemplary embodiment, leaf spring 172 and coil spring 173 are used to reduce the conductor resistance as much as possible. Thus, leaf spring 172 in the present exemplary embodiment is made of a material having low conductor resistance. Although examples of a material having low conductor resistance include phosphor bronze and silver, leaf spring 172 is preferably made of phosphor bronze that can be obtained relatively inexpensively. This configuration enables spring part 171 having low conductor resistance to be obtained at low cost.

Alternatively, when spring part 171 is formed using only leaf spring 172, spring part 171 having low conductor resistance can be formed. However, leaf spring 172 needs to be increased in size to secure its strength. That is, leaf spring 172 needs to be increased in width. This leaf spring 172 causes a difficulty in reducing battery housing 10 in size.

In contrast, when leaf spring 172 and coil spring 173 are used as in the present exemplary embodiment, spring part 171 can secure contact pressure with battery 7 with suppressing a voltage drop. When spring part 171 includes leaf spring 172 and coil spring 173, spring part 171 can be reduced in size while securing spring strength. Thus, even when battery 7 minimum in size of a standard is used, energization can be secured. Alternatively, even when battery 7 maximum in size of the standard is used, spring part 171 can be prevented from fatiguing.

When spring part 171 includes leaf spring 172 and coil spring 173 as described above, spring part 171 capable of securing contact pressure with suppressing a voltage drop can be formed with a simpler configuration, and spring part 171 can be more compact in size.

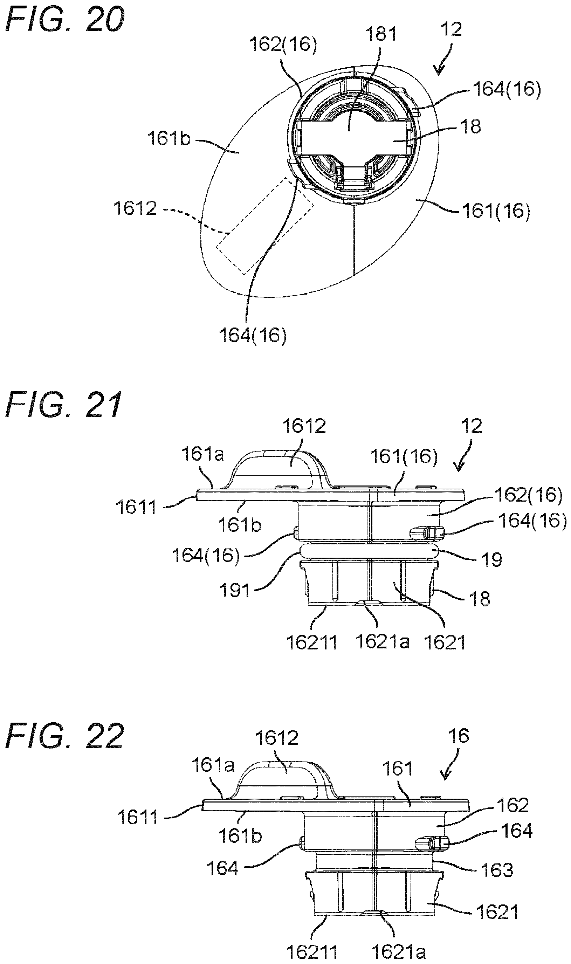

Fig. 19 is a plan view illustrating battery cover 12 of oral cavity cleaning device 1 according to the present exemplary embodiment. Fig. 20 is a diagram illustrating a back surface of battery cover 12 of oral cavity cleaning device 1 according to the present exemplary embodiment. Fig. 21 is a side view illustrating battery cover 12 of oral cavity cleaning device 1 according to the present exemplary embodiment. Fig. 22 is a side view illustrating cover body 16 of oral cavity cleaning device 1 according to the present exemplary embodiment. In the present exemplary embodiment, battery cover 12 includes cover body 16 as illustrated in Fig. 22, and positive electrode terminal 18 is attached to cover body 16 as illustrated in Figs. 17 to 21. Specifically, cover body 16 includes flat plate part 161, and insertion part 162 that is connected to and protrudes upward from inner surface 161b (i.e., an upper surface of flat plate part 161) of flat plate part 161 and that is inserted into housing space 110 when battery cover 12 is attached to body 11.

In the present exemplary embodiment, flat plate part 161 has a substantially elliptical shape in plan view (i.e., in a state viewed along the vertical direction) as illustrated in Figs. 19 and 20, and flat plate part 161 is housed in housing recess 3132 formed in bottom wall 313 of housing 31 in a state where battery cover 12 is attached to body 11 as illustrated in Figs. 13 to 15. Thus, in the present exemplary embodiment, opening 110a of housing space 110 is formed communicating with housing recess 3132 of bottom wall 313 as illustrated in Fig. 16.

As illustrated in Figs. 13 to 16, housing recess 3132 is formed in bottom wall 313 and is open downward and laterally, and flat plate part 161 is housed in housing recess 3132 when battery cover 12 is attached to body 11, in the present exemplary embodiment. Additionally, when battery cover 12 is attached to body 11, outer peripheral surface 1611 of flat plate part 161 is substantially flush with an outer surface of small-diameter part 315 as illustrated in Fig. 12. That is, when device body 3 is viewed from below with battery cover 12 attached to body 11 as illustrated in Fig. 11, flat plate part 161 is entirely present inside small-diameter part 315, and outer peripheral surface 1611 of flat plate part 161 constitutes a part of a contour of small-diameter part 315.

As described above, in the present exemplary embodiment, oral cavity cleaning device 1 includes device body 3 in which body 11 is incorporated. When battery cover 12 is attached to body 11, battery cover 12 is disposed with its outer periphery along an outer periphery of bottom surface 3131 of device body 3. This configuration enables battery cover 12 to be prevented from unnaturally protruding from device body 3 when battery cover 12 is attached to body 11, thereby improving appearance quality of oral cavity cleaning device 1 to improve design properties of oral cavity cleaning device 1.

As illustrated in Fig. 17, insertion part 162 includes a distal end part (i.e., an upper end part) serving as positive electrode terminal attachment part 1621 to which positive electrode terminal 18 is attached, and positive electrode terminal 18 includes a part attached to distal end surface 1621a (i.e., a lower surface of positive electrode terminal attachment part 1621 of positive electrode terminal 18) of positive electrode terminal attachment part 1621, the part serving as energization part 181 of positive electrode terminal 18.

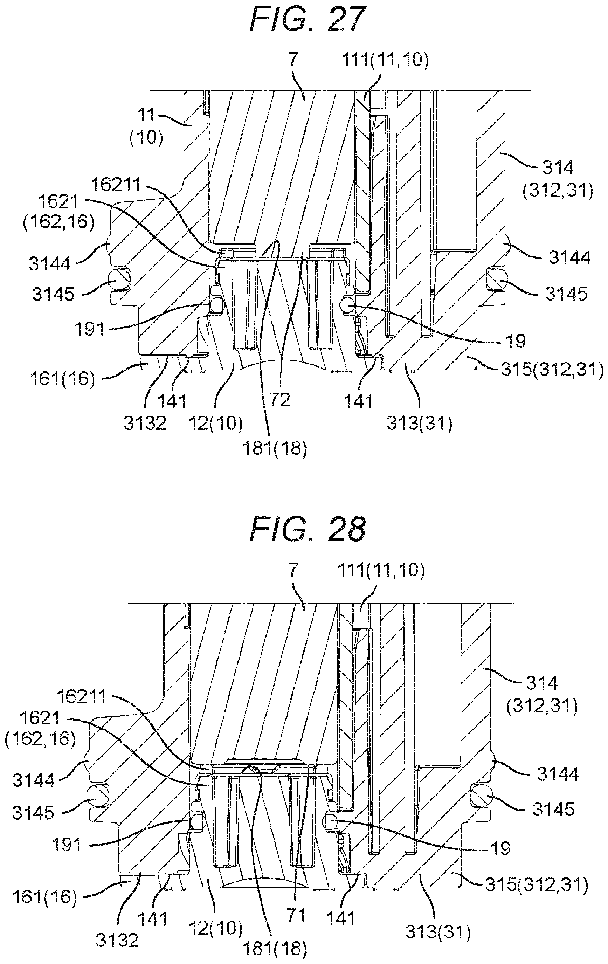

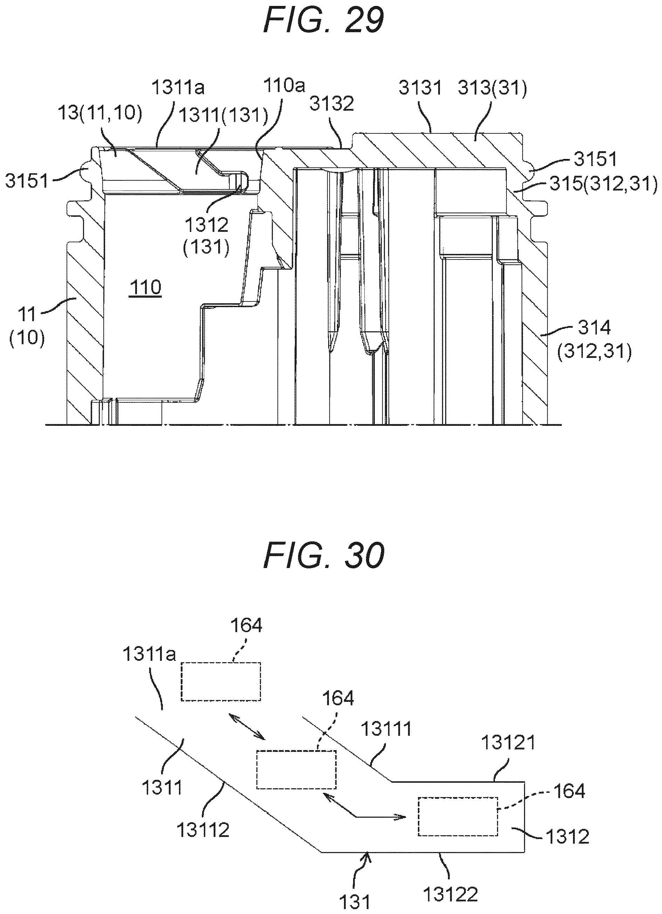

Figs. 27 to 29 are each a diagram illustrating battery housing 10 of oral cavity cleaning device 1 according to the present exemplary embodiment. Fig. 27 is a partially enlarged sectional view illustrating a state in which battery 7 is inserted at a normal position and battery cover 12 is attached. Fig. 28 is a partially enlarged sectional view illustrating a state in which battery 7 is inserted at a reverse position and battery cover 12 is attached. Fig. 29 is a partially enlarged sectional view illustrating a state where battery 7 and battery cover 12 are removed. As illustrated in Fig. 27, when battery cover 12 is attached to body 11, energization part 181 of positive electrode terminal 18 is brought into contact with and electrically connected to positive electrode 72 of battery 7. As described above, in the present exemplary embodiment, battery 7 is housed and held in housing space 110 in a state where positive electrode 72 is positioned below.

However, housing space 110 has an elongated shape in the vertical direction, and thus allows battery 7 to be inserted into housing space 110 in a state where positive electrode 72 is positioned above as long as the longitudinal direction is substantially aligned with the vertical direction. That is, battery 7 can be inserted reversely in housing space 110. When battery 7 is inserted reversely in housing space 110 as described above, oral cavity cleaning device 1 may malfunction.

Thus, when battery 7 is reversely inserted into housing space 110 in the present exemplary embodiment, there is no energization (i.e., electric power cannot be supplied to motor 3231). Specifically, cover body 16 is provided on its distal end (i.e., distal end surface 1621a of positive electrode terminal attachment part 1621) with rib 16211 protruding upward from energization part 181 of positive electrode terminal 18, as illustrated in Figs. 17, 27 and 28. Rib 16211 is formed at a position where battery 7 exists and no protrusion of positive electrode 72 exists when viewed along the vertical direction. This configuration enables the protrusion of positive electrode 72 to be brought into contact with energization part 181 as illustrated in Fig. 27 when battery 7 is inserted in a state where positive electrode 72 is positioned below. In contrast, when battery 7 is inserted in a state where positive electrode 72 is positioned above, rib 16211 comes into contact with negative electrode 71 of battery 7 to form a gap between energization part 181 and negative electrode 71 as illustrated in Fig. 28. That is, when battery 7 is inserted with positive electrode 72 positioned above, rib 16211 prevents contact between energization part 181 and negative electrode 71.

In the present exemplary embodiment, when battery cover 12 is attached to body 11, a gap between battery cover 12 and body 11 is sealed by a seal member, and thus a liquid is prevented from entering housing space 110 and splashing on battery 7.

Specifically, insertion part 162 of cover body 16 is provided in its outer periphery with attachment groove 163 over the entire periphery as illustrated in Fig. 22, and O-ring 19 as a seal member is detachably attached in attachment groove 163 as illustrated in Figs. 17, 18, and 21. This configuration enables presence of O-ring 19 (i.e., an example of seal member) to be visually checked when battery cover 12 is attached to body 11. As a result, when O-ring 19 (i.e., an example of seal member) is detached, the detachment of O-ring 19 (i.e., an example of seal member) can be checked more reliably as compared with when an O-ring (i.e., an example of seal member) is attached on body 11. Thus, this configuration enables battery cover 12 to be more reliably prevented from being attached to body 11 in a state wherea gap between battery cover 12 and body 11 is not sealed.

As illustrated in Fig. 16, opening 110a in body 11 is continuously provided around its entire circumference with inner wall 13 extending upward in the vertical direction, and when battery cover 12 is attached to body 11, entire outer periphery 191 (see Fig. 21) of O-ring 19 is brought into close contact with inner wall 13. This configuration allows a space between battery cover 12 (strictly, insertion part 162) and body 11 (strictly, inner wall 13) to be sealed by O-ring 19 as a seal member. At this time, attachment groove 163 is formed below positive electrode terminal 18 (i.e., close to a base of insertion part 162, or close to flat plate part 161) attached to positive electrode terminal attachment part 1621, so that the whole of positive electrode terminal 18 is also housed inside a part sealed by O-ring 19.

As described above, in the present exemplary embodiment, O-ring 19 (i.e., an example of seal member) seals the part closer to opening 110a than battery 7 and the terminal (i.e., negative electrode terminal 17 and positive electrode terminal 18) when battery cover 12 is attached to body 11. That is, providing O-ring 19 (i.e., a seal member) that seals a gap between battery cover 12 and body 11 causes housing space 110 in which battery 7 of oral cavity cleaning device 1 is housed to be a waterproof structure. Thus, oral cavity cleaning device 1 driven by battery 7 can be used in a state where a liquid is prevented from entering housing space 110.

Alternatively, body 11 (strictly, inner wall 13) may be provided with a groove so that an O-ring is detachably attached to the groove to seal between battery cover 12 (strictly, insertion part 162) and body 11 (strictly inner wall 13).

As illustrated in Figs. 10 to 15, battery cover 12 according to the present exemplary embodiment is configured to be able to switch between an attachment state and a non-attachment state by rotating cover body 16. That is, battery cover 12 includes cover body 16 that is rotatably attached to body 11 so as to be switchable between the attachment state and the non-attachment state. Then, battery cover 12 is opened or closed by rotating the whole of battery cover 12 (i.e., the whole of cover body 16 and O-ring 19). Opening 110a is formed in a circular shape and insertion part 162 inserted into opening 110a is formed in a substantially cylindrical columnar shape in the present exemplary embodiment, so that cover body 16 can be rotated at the time of switching between the attachment state and the non-attachment state.

The attachment state of battery cover 12 is a state in which a gap between battery cover 12 and body 11 is sealed with O-ring 19 (i.e., an example of seal member) while opening 110a of housing space 110 is closed. The non-attachment state of battery cover 12 is a state in which sealing of a gap between battery cover 12 and body 11 by O-ring 19 (i.e., an example of seal member) is released to enable battery cover 12 to be removed from body 11.

Additionally, when battery cover 12 is removed from body 11, such as when battery 7 is replaced, in the present exemplary embodiment, battery cover 12 can be opened and closed without using a member such as a coin. That is, battery cover 12 can be opened and closed by a hand of a user or the like, so that battery 7 can be replaced more easily.

Specifically, cover body 16 includes operation rib 1612 on which a finger can be hooked to switch between the attachment state and the non-attachment state of battery cover 12. As illustrated in Fig. 18, in the present exemplary embodiment, operation rib 1612 is formed protruding downward and toward outer surface 161a (i.e., a lower surface of flat plate part 161) of flat plate part 161. That is, operation rib 1612 is provided protruding along the longitudinal direction of battery 7. This configuration enables operation rib 1612 to have an appropriate height (i.e., protrusion height L1, see Fig. 5) so that operability when battery cover 12 is opened or closed can be further improved.

As described above, oral cavity cleaning device 1 described in the present exemplary embodiment is configured to rotate cover body 16 to switch between the attachment state and the non-attachment state of battery cover 12. The attachment state and the non-attachment state of battery cover 12 can be switched by hooking a finger on operation rib 1612 and operating operation rib 1612 to rotate cover body 16. That is, battery cover 12 can be manually opened and closed.

This configuration does not require a member for detaching battery cover 12 from body 11, such as a coin, to be used when battery cover 12 is detached from body 11 to replace battery 7.

For example, when battery cover 12 is configured to be removed from body 11 by using a coin or the like, a member such as the coin is required to be prepared in advance when battery cover 12 is removed from body 11, thereby causing a user to feel troublesome. In contrast, when battery cover 12 is configured to be removed from body 11 by hooking a finger on operation rib 1612 as in the present exemplary embodiment, battery cover 12 can be removed from body 11 even when there is no member such as a coin at hand. Thus, the user does not feel troublesome to prepare a member such as a coin when battery 7 is replaced. Thus, battery cover 12 can be opened and closed more easily to enable battery 7 to be replaced more easily.

As illustrated in Fig. 5, operation rib 1612 is positioned close to the center of tube housing space 2b and tube 5 is positioned outside operation rib 1612 in tube housing space 2b in the housed state of device body 3 in the present exemplary embodiment. This configuration enables tube 5 to be wound outside operation rib 1612 (i.e., on an outer peripheral side) when tube 5 is housed in tube housing space 2b. That is, tube 5 can be wound with a relatively large curvature radius, so that tube 5 is prevented from being crushed or broken. As described above, operation rib 1612 exists inside tube 5 housed in tube housing space 2b in the present exemplary embodiment.

Operation rib 1612 has protrusion height L1 smaller than diameter D1 of tube 5. This configuration enables operation rib 1612 to be more reliably housed in tube housing space 2b when device body 3 is in the housed state. Tube 5 is also prevented from being crushed or broken by operation rib 1612.

Operation rib 1612 preferably has protrusion height L1 within a range which is equal to or greater than 3.5 mm and equal to or less than 4.5 mm. When protrusion height L1 of operation rib 1612 is set within the range above, interference with a mating part (such as tube 5 existing together in tube housing space 2b) can be prevented while deterioration of operability of operation rib 1612 is suppressed.

As illustrated in Fig. 19, in the present exemplary embodiment, operation rib 1612 is provided at a position eccentric from rotation center C1 of cover body 16. Specifically, when device body 3 is viewed from below, operation rib 1612 exists only in one of regions divided by a straight line passing through rotation center C1 of cover body 16. At this time, operation rib 1612 is positioned outside outer periphery 191 (see Fig. 21) of O-ring 19 (i.e., an example of seal member).

This configuration allows operation rib 1612 to exist at a position away from opening 110a into which battery 7 is inserted, thereby reducing operation force (e.g., torque) required for opening or closing battery cover 12. That is, cover body 16 can be rotated with a relatively weak force, so that operability when battery cover 12 is opened or closed can be further improved.

Further, in the present exemplary embodiment, Cover body 16 includes an engagement part that is releasably engaged with an engaged part formed in body 11 and is capable of preventing cover body 16 from coming off from body 11 in the attachment state. This configuration enables battery cover 12 to maintain a closed state of opening 110a of housing space 110, and thus enables battery cover 12 to be more reliably prevented from coming off from body 11.

Specifically, engagement claw 164 protruding outward in the radial direction is provided on an outer periphery of insertion part 162 of cover body 16 as illustrated in Fig. 17, and engagement groove 131 with which engagement claw 164 engages is provided on an inner surface of inner wall 13 of body 11 as illustrated in Fig. 16. A plurality of engagement grooves 131 may be provided.

Engagement claws 164 paired are formed on respective sides across rotation center C 1 of cover body 16, and each engagement groove 131 is formed in a part of inner wall 13, the part corresponding to one of engagement claws 164, in the present exemplary embodiment.

As just described, providing engagement claws 164 on battery cover 12 and engagement grooves 131 in body 11 enables further reduction in opening diameter of housing space 110 (i.e., a diameter of opening 110a). For example, when an engagement claw is provided on body 11, housing space 110 needs to be increased in its opening diameter by size of engagement claw. However, when engagement claw 164 is provided on battery cover 12, housing space 110 does not need to be increased in opening diameter. Thus, housing space 110 can be further reduced in opening diameter.

As illustrated in Figs. 19 and 20, in the present exemplary embodiment, operation rib 1612 is positioned outside engagement claw 164 with respect to rotation center C1 of battery cover 12 that is rotated to switch between the attachment state and the non-attachment state. In other words, operation rib 1612 includes an operation part (i.e., a part where a finger is hooked during operation) existing outside a virtual circle including an outer periphery of engagement claw 164 (i.e., a region where rotation center C1 of battery cover 12 does not exist) as viewed along rotation axis C of cover body 16. This configuration allows operation rib 1612 to be operated outside the virtual circle including the outer periphery of engagement claw 164, so that operability when battery cover 12 is opened or closed can be further improved.

Operation rib 1612, attachment groove 163, and engagement claw 164 are integrally molded with cover body 16 in the present exemplary embodiment, and thus cover body 16 is composed of one component. This configuration enables reduction in number of components, and thus enables a simple configuration and cost reduction. Alternatively, battery cover 12 can be configured to be entirely rotated when battery cover 12 is opened or closed while at least one of operation rib 1612, attachment groove 163, and engagement claw 164 is formed as a separate member.

As illustrated in Fig. 29, engagement groove 131 further includes opening 1311a that is open toward battery cover 12, and forward engagement groove 1311 that allows engagement claw 164 to move backward in housing space 110. Similarly to the case in Fig. 16, device body 3 is inverted in Fig. 29. Engagement groove 131 includes backward engagement groove 1312 that is continuously connected to forward engagement groove 1311 on a back side in housing space 110, and that allows engagement claw 164 to move in a rotation direction of battery cover 12 in housing space 110. In the present exemplary embodiment, opening 110a of housing space 110 has a substantially cylindrical columnar shape, and a circumferential direction of the part close to opening 110a in housing space 110 is the rotation direction of battery cover 12. Engagement groove 131 including forward engagement groove 1311 and backward engagement groove 1312 causes engagement groove 131 to have a shape in which engagement groove 131 is bent backward (i.e., upward) in the circumferential direction. This configuration enables battery cover 12 to be opened and closed by two operations of pushing battery cover 12 backward and rotating battery cover 12 in the circumferential direction. When battery cover 12 is attached to body 11, engagement claw 164 is to be introduced into backward engagement grooves 1312.

As described above, battery cover 12 can be prevented from coming off from body 11 while opening and closing operation of battery cover 12 is simplified in the present exemplary embodiment.

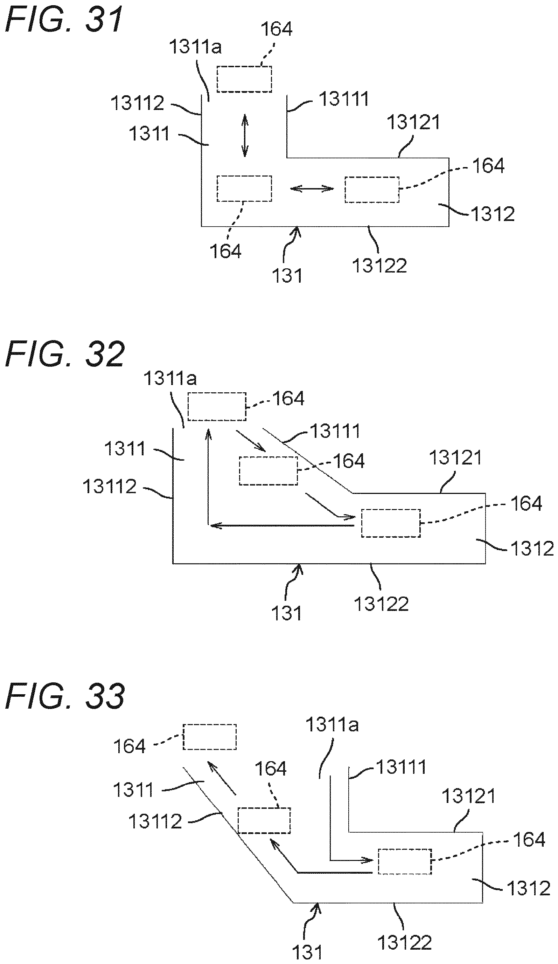

Fig. 30 is a diagram schematically illustrating an example of engagement groove 131 formed in battery housing 10 of oral cavity cleaning device 1 according to the present exemplary embodiment. Fig. 31 is a diagram schematically illustrating a first modification of engagement groove 131 formed in battery housing 10 of oral cavity cleaning device 1 according to the present exemplary embodiment. Fig. 32 is a diagram schematically illustrating a second modification of engagement groove 131 formed in battery housing 10 of oral cavity cleaning device 1 according to the present exemplary embodiment. Fig. 33 is a diagram schematically illustrating a third modification of engagement groove 131 formed in battery housing 10 of oral cavity cleaning device 1 according to the present exemplary embodiment. Similarly to the case in Fig. 29, device body 3 is inverted in Fig. 30 to 33. As illustrated in Figs. 30 to 33, backward engagement groove 1312 includes first backward wall part 13121 positioned facing (i.e., below) battery cover 12 and second backward wall part 13122 positioned backward (i.e., above) in housing space 110, thereby defining both sides in the longitudinal direction of battery 7 (i.e., both sides of battery 7 in the vertical direction). Thus, when battery cover 12 attached to body 11 is about to be pulled out, engagement claw 164 introduced into backward engagement groove 1312 is caught by first backward wall part 13121 to cause battery cover 12 to maintain a closed state of opening 110a of housing space 110. That is, when engagement claw 164 is introduced into backward engagement groove 1312, battery cover 12 is locked in a state of closing opening 110a of housing space 110.

forward engagement groove 1311 includes first forward wall part 13111 connected to first backward wall part 13121 and second forward wall part 13112 connected to second backward wall part 13122, thereby defining both sides in the circumferential direction (i.e., the rotation direction of battery cover 12) in housing space 110. Thus, when battery cover 12 is pushed backward, engagement claw 164 is introduced into forward engagement grooves 1311 from opening 1311a, and is moved backward (i.e., upward) along the longitudinal direction of battery 7. Then, when battery cover 12 is rotated toward one side in the rotation direction (i.e., in a closing direction) in a state where engagement claw 164 has been pushed backward (i.e., upward) in forward engagement groove 1311, engagement claw 164 is introduced into backward engagement groove 1312, and then battery cover 12 is locked in a state of closing opening 110a of housing space 110.

In contrast, when battery cover 12 having been locked is turned to the other side in the rotation direction (i.e., in an opening direction), engagement claw 164 is introduced from backward engagement groove 1312 into forward engagement groove 1311, and then battery cover 12 can be removed from body 11. Then, when battery cover 12 is pulled forward in this state, engagement claw 164 is moved forward (i.e., downward) in forward engagement groove 1311 in the longitudinal direction of battery 7, and is discharged from opening 1311a to the outside of engagement groove 131. As a result, battery cover 12 is removed from body 11.

As illustrated in Figs. 29 and 30, first forward wall part 13111 is inclined in a direction away from first backward wall part 13121 toward opening 1311a, and second forward wall part 13112 is inclined in a direction away from second backward wall part 13122 toward opening 1311a.

Other examples of engagement groove 131 having a shape in which engagement groove 131 is bent backward (i.e., upward) in the circumferential direction (i.e., the rotation direction of battery cover 12) include an example illustrated in Fig. 31 in which first forward wall part 13111 and second forward wall part 13112 extend in the longitudinal direction (i.e., the vertical direction) of battery 7.

The other examples also include another example illustrated in Fig. 32, in which although first forward wall part 13111 is inclined in a direction away from first backward wall part 13121 toward opening 1311a, second forward wall part 13112 extends in the longitudinal direction (i.e., the vertical direction) of battery 7.

The other examples also include yet another example illustrated in Fig. 33, in which although first forward wall part 13111 extends in the longitudinal direction (i.e., the vertical direction) of battery 7, second forward wall part 13112 is inclined in a direction away from second backward wall part 13122 toward opening 1311a.

The example illustrated in Fig. 31 is configured such that battery cover 12 is pushed backward (i.e., upward) to move engagement claws 164 backward (i.e., upward) of forward engagement groove 1311, and then battery cover 12 in this state is rotated toward one side in the rotation direction (i.e., in the closing direction) to be brought into a locked state. When the locked state is released, battery cover 12 is rotated to the other side in the rotation direction (i.e., in the opening direction) to cause engagement claw 164 to face opening 1311a of forward engagement groove 1311, and then battery cover 12 in this state is pulled forward (i.e., downward).

As described above, negative electrode terminal 17 includes spring part 171 in the present exemplary embodiment, so that when a hand is released from battery cover 12 having been pushed backward (i.e., upward), battery cover 12 is pushed forward (i.e., downward) by a pushing force of spring part 171, and then engagement claw 164 is moved forward (i.e., downward). At this time, when engagement claw 164 is moved so as to face first forward wall part 13111 in the circumferential direction (i.e., the rotation direction of battery cover 12), even if battery cover 12 has been rotated to one side in the rotation direction (i.e., in the closing direction), battery cover 12 cannot be brought into the locked state. As described above, when first forward wall part 13111 and second forward wall part 13112 extend in the vertical direction, battery cover 12 is required to be rotated while being pushed depending on the amount of movement of engagement claw 164 caused by a pushing force of spring part 171, and thus may be deteriorated in operability.

In contrast, when first forward wall part 13111 is inclined in a direction away from first backward wall part 13121 toward opening 1311a as illustrated in Figs. 30 and 32, battery cover 12 is not required to be rotated while being pushed. That is, even when engagement claw 164 is moved so as to face first forward wall part 13111 in the circumferential direction (i.e., the rotation direction of battery cover 12) by a pushing force of spring part 171, engagement claw 164 can be introduced into backward engagement groove 1312 by simply rotating battery cover 12. Specifically, simply rotating battery cover 12 moves engagement claw 164 along which first forward wall part 13111 has been inclined, so that engagement claw 164 moved along first forward wall part 13111 is introduced into backward engagement groove 1312.

As illustrated in Figs. 31 and 32, when second forward wall part 13112 extends in the longitudinal direction (i.e., the vertical direction) of battery 7, battery cover 12 is required to be rotated to the other side in the rotation direction (i.e., in the opening direction) to cause engagement claw 164 to face opening 1311a of forward engagement groove 1311, and then battery cover 12 in this state is pulled forward (i.e., downward) to release a locked state.

In contrast, when second forward wall part 13112 is inclined in a direction away from second backward wall part 13122 toward opening 1311a as illustrated in Figs. 30 and 33, battery cover 12 is not required to be pulled forward (i.e., downward) to release the locked state. That is, when battery cover 12 is simply rotated toward the other side in the rotation direction (i.e., the opening direction), engagement claw 164 can be moved to opening 1311a along inclined second forward wall part 13112.

Thus, when first forward wall part 13111 and second forward wall part 13112 are inclined as illustrated in Fig. 30, battery cover 12 can be improved in operability of both opening operation and closing operation. For this reason, first forward wall part 13111 and second forward wall part 13112 are inclined in the present exemplary embodiment.

Engagement groove 131 may be formed in any of the shapes illustrated in Figs. 31 to 33.

Even engagement groove 131 formed as described above enables battery cover 12 to be prevented from coming off from body 11 while opening and closing operation of battery cover 12 is simplified.

Engagement claw 164 (i.e., an example of engagement part) in the present exemplary embodiment is formed below attachment groove 163 (i.e., on a side close to a base of insertion part 162, or close to flat plate part 161) in which O-ring 19 (i.e., an example of seal member) is attached. Thus, when battery cover 12 is attached to body 11, attachment groove 163 is positioned behind engagement claw 164 (i.e., an example of engagement part) in housing space 110. This configuration allows a gap between battery cover 12 and body 11 to be sealed backward (i.e., upward) of engagement claw 164 (i.e., an example of engagement part) engaged with engagement grooves 131 (i.e., an example of engaged part), so that a liquid can be more reliably prevented from entering a part where battery 7 is housed in housing space 110.

However, when engagement groove 131 (i.e., an example of engaged part) and engagement claw 164 (i.e., an example of engagement part) are engaged with each other in front of (i.e., below) O-ring 19 (i.e., a seal member), a liquid may enter engagement groove 131 (i.e., an example of engaged part) during use of oral cavity cleaning device 1. Then, when the liquid enters engagement groove 131 (i.e., an example of engaged part), the liquid in engagement groove 131 (i.e., an example of engaged part) may flow toward battery 7 when battery cover 12 is removed from body 11.

Thus, in the present exemplary embodiment, body 11 is provided on its peripheral part 14 around opening 110a of housing space 110 (i.e., a peripheral part around opening 110a on the lower surface of device body 3) with sealing rib 141 over the entire circumference of peripheral part 14, sealing rib 141 coming into contact with battery cover 12 in the attachment state, as illustrated in Figs. 16 and 27. This configuration allows sealing rib 141 to seal a gap between battery cover 12 and body 11 in front of (i.e., below or outside) engagement claw 164 (i.e., an example of engagement part) and engagement groove 131 (i.e., an example of engaged part) when battery cover 12 is attached to body 11. This configuration enables preventing a liquid from entering an engaged part in the shape of a groove (e.g., engagement groove 131) during use of oral cavity cleaning device 1, for example, and thus enables preventing the liquid accumulated in the engaged part in the shape of a groove (e.g., engagement groove 131) from flowing backward in housing space 110 when battery cover 12 is removed from body 11. As described above, the liquid can be prevented from entering housing space 110 more reliably in the present exemplary embodiment due to the double sealing structure.

In the present exemplary embodiment, cover body 16 includes at least a part that protrudes from device body 3 as viewed along rotation axis C of cover body 16 while battery cover 12 is rotated to switch the attachment state to the non-attachment state. When the whole of battery cover 12 exists inside device body 3 (i.e., does not protrude from device body 3) as viewed along rotation axis C of cover body 16 while cover body 16 is rotated between the attachment state and the non-attachment state, a gap between battery cover 12 and body 11 is sealed by O-ring 19 (i.e., an example of seal member). This configuration causes the gap between battery cover 12 and body 11 to be sealed even when battery cover 12 is not securely attached to body 11 (i.e., in a half-open state), and thus enables the liquid to be more reliably prevented from entering housing space 110.

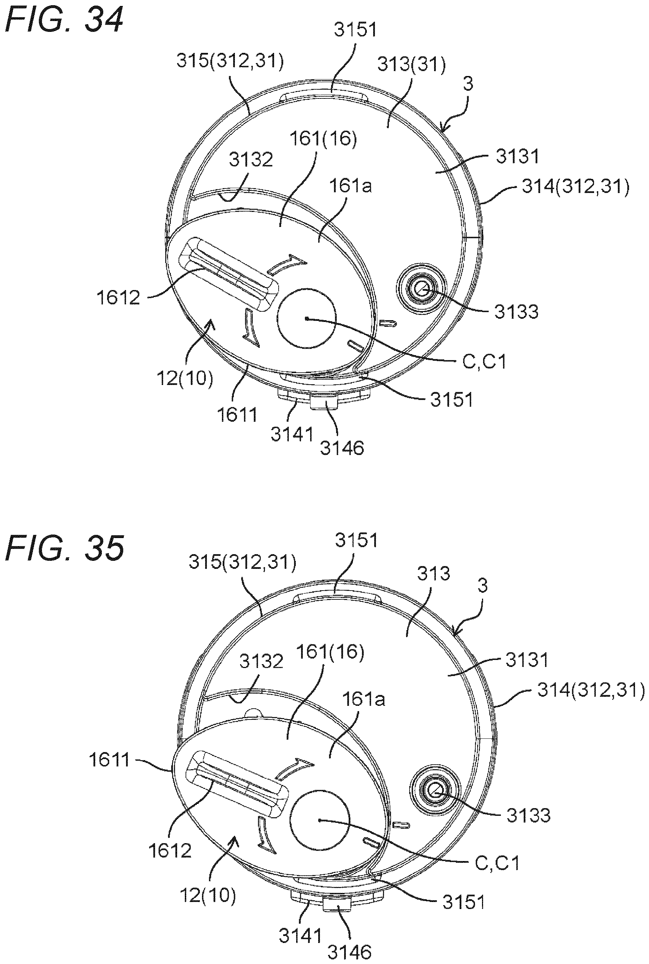

Figs. 34 and 35 are each a diagram illustrating device body 3 of oral cavity cleaning device 1 according to the present exemplary embodiment. Fig. 34 is a diagram illustrating a back surface of device body 3 in a state where battery cover 12 is in a half-open state without protruding from large-diameter part 314. Fig. 35 is a diagram illustrating a back surface of device body 3 in a state where battery cover 12 is in a half-open state while protruding from large-diameter part 314. As illustrated in Figs. 11 and 34, the gap between battery cover 12 and body 11 is sealed with O-ring 19 (i.e., an example of seal member) in the present exemplary embodiment when the whole of battery cover 12 exists inside a contour of large-diameter part 314 when device body 3 is viewed from below. This kind of configuration can be formed by causing engagement claw 164 to be positioned in backward engagement groove 1312 of engagement groove 131 when the whole of battery cover 12 exists inside the contour of large-diameter part 314 in a state where device body 3 is viewed from below, for example.

Additionally, in the present exemplary embodiment, large-diameter part 314 is formed with an outer diameter that is slightly smaller than an inner diameter of tubular body 21. Thus, when at least a part of battery cover 12 protrudes from device body 3 as viewed along rotation axis C of cover body 16, as illustrated in Figs. 14 and 35, tank 2 cannot be attached to device body 3. This configuration prevents device body 3 from being inserted into tank 2 when battery cover 12 is forgotten to be closed (i.e., when housing space 110 is in an unsealed state). That is, when tank 2 can be attached to device body 3, housing space 110 is always sealed.

This configuration enables preventing oral cavity cleaning device 1 from being used when a liquid is permitted to enter housing space 110, and thus enables preventing the liquid from entering housing space 110 during use of oral cavity cleaning device 1.

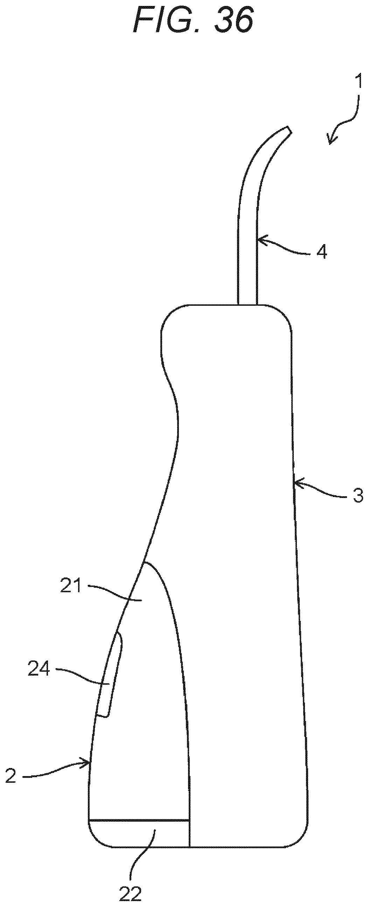

Although oral cavity cleaning device 1 with a telescopic tank in which device body 3 is slidably supported by tank 2 has been described in the above-mentioned exemplary embodiment by way of example, the present disclosure is not limited thereto. Fig. 36 is a side view illustrating oral cavity cleaning device 1 according to a modification. For example, the present disclosure is also applicable to oral cavity cleaning device 1 with a separate tank as illustrated in Fig. 36. Oral cavity cleaning device 1 with a separate tank illustrated in Fig. 36 includes tank 2 that is detachably attached to device body 3. Then, nozzle 4 is detachably attached to device body 3.

When oral cavity cleaning device 1 with a separate tank is driven by a battery, a battery housing in which the battery is housed can be reduced in size by attaching a positive electrode terminal to a battery cover. The battery cover also can be configured such that an attachment state and a non-attachment state can be switched by rotating a cover body, and the cover body can be provided with an operation rib capable of switching between the attachment state and the non-attachment state of the battery cover by being hooked by a finger. At this time, the operation rib can be formed protruding along a longitudinal direction of the battery, or can be formed protruding along a radial direction of the battery.

When the operation rib is formed protruding along the longitudinal direction of the battery while the battery cover is positioned downward, the battery housing is preferably formed by forming a recess in a bottom wall of device body 3 and disposing the operation rib in the recess. This configuration prevents the operation rib from protruding from a lower end of device body 3, and thus enables the operation rib to be hidden in the recess in a normal placement state.

### [Operation and effect]

Hereinafter, a characteristic configuration of the oral cavity cleaning device described in the exemplary embodiment above and the modification of the exemplary embodiment, and an effect obtained by the characteristic configuration will be described.

Oral cavity cleaning device 1 described in the exemplary embodiment above and the modification of the exemplary embodiment is a battery-replaceable device that is driven by battery 7 that is replaceable. Oral cavity cleaning device 1 includes body 11 having housing space 110 in which battery 7 is housed, battery cover 12 configured to close opening 110a of housing space 110, and O-ring 19 (i.e., an example of seal member) configured to seal a gap between battery cover 12 and body 11.

Battery cover 12 includes cover body 16 rotatably attached to body 11.

Oral cavity cleaning device 1 described in the exemplary embodiment and the modification of the exemplary embodiment is configured to be switchable between an attachment state and a non-attachment state of battery cover 12 by rotating cover body 16. The attachment state of battery cover 12 is a state in which a gap between battery cover 12 and body 11 is sealed with O-ring 19 (i.e., an example of seal member) while opening 110a of housing space 110 is closed. The non-attachment state of battery cover 12 is a state in which sealing of a gap between battery cover 12 and body 11 by O-ring 19 (i.e., an example of seal member) is released to enable battery cover 12 to be removed from body 11. Battery cover 12 includes a terminal (i.e., negative electrode terminal 17 or positive electrode terminal 18) that comes into contact with battery 7 to be electrically connected to battery 7 when battery cover 12 is attached to cover body 16 to be brought into the attachment state.

Cover body 16 includes operation rib 1612 on which a finger can be hooked to switch between the attachment state and the non-attachment state of battery cover 12.

As described above, oral cavity cleaning device 1 described in the exemplary embodiment and the modification of the exemplary embodiment is configured to rotate cover body 16 to switch between the attachment state and the non-attachment state of battery cover 12. The attachment state and the non-attachment state of battery cover 12 can be switched by hooking a finger on operation rib 1612 and operating operation rib 1612 to rotate cover body 16. That is, battery cover 12 can be manually opened and closed.

This configuration does not require a member for removing battery cover 12 from body 11, such as a coin, to be used when battery cover 12 is removed from body 11 to replace a battery, for example, so that battery cover 12 can be opened and closed more easily. As a result, battery 7 can be replaced more easily.

Additionally, a gap between battery cover 12 and body 11 is sealed by O-ring 19 (i.e., an example of seal member) in a state where battery cover 12 is attached to body 11, so that oral cavity cleaning device 1 driven by battery 7 can be used in a state where a liquid is prevented from entering housing space 110. Providing O-ring 19 (i.e., an example of seal member) that seals the gap between battery cover 12 and body 11 as described above enables housing space 110 in which battery 7 of oral cavity cleaning device 1 is housed to be a waterproof structure.

Operation rib 1612 may be formed protruding along the longitudinal direction of battery 7.

This configuration enables operation rib 1612 to have an appropriate height (i.e., protrusion height L1) so that operability when battery cover 12 is opened or closed can be further improved.

Operation rib 1612 may be provided at a position eccentric from rotation center C1 of cover body 16.

Providing operation rib 1612 at a position eccentric from rotation center C1 of cover body 16 as described above enables reduction in operation force (e.g., torque) required for opening or closing battery cover 12. Thus, cover body 16 can be rotated with a relatively weak force, so that operability when battery cover 12 is opened or closed can be further improved.

Cover body 16 may include attachment groove 163 in which O-ring 19 (i.e., an example of seal member) is attached, and O-ring 19 (i.e., an example of seal member) may be attached into attachment groove 163.

This configuration enables presence of O-ring 19 (i.e., an example of seal member) to be visually checked when battery cover 12 is attached to body 11. As a result, when O-ring 19 (i.e., an example of seal member) is detached, O-ring 19 (i.e., an example of seal member) detached can be checked more reliably as compared with when O-ring 19 (i.e., an example of seal member) is attached on body 11. Thus, this configuration enables battery cover 12 to be more reliably prevented from being attached to body 11 in a state where a gap between battery cover 12 and body 11 is not sealed. Attaching O-ring 19 (i.e., an example of seal member) to cover body 16 causes O-ring 19 (i.e., an example of seal member) to be cleaned easily, and thus also has an advantage of enabling a cleaner state to be maintained.

Operation rib 1612 may be positioned outside outer periphery 191 of O-ring 19 (i.e., an example of seal member).

This configuration enables further reduction in operation force (e.g., torque) required for opening or closing battery cover 12, and thus enables further improvement in operability of opening or closing battery cover 12.

Cover body 16 may include an engagement part that is releasably engaged with an engaged part formed in body 11 and is capable of preventing cover body 16 from coming off from body 11 in the attachment state.

This configuration enables battery cover 12 to maintain a closed state of opening 110a of housing space 110, and thus enables battery cover 12 to be more reliably prevented from coming off from body 11.

The engagement part may be engagement claw 164, and the engaged part may be engagement groove 131.

For example, when an engagement claw is provided on body 11, housing space 110 needs to be increased in its opening diameter by size of engagement claw. However, when engagement claw 164 is provided on battery cover 12, housing space 110 does not need to be increased in opening diameter. Thus, housing space 110 can be further reduced in opening diameter. As a result, a space for housing battery 7 (i.e., a housing space) can be further downsized.

Operation rib 1612 may be positioned outside engagement claw 164 with respect to rotation center C1 of battery cover 12 that is rotated to switch between the attachment state and the non-attachment state.

This configuration enables further reduction in operation force (e.g., torque) required for opening or closing battery cover 12, and thus enables further improvement in operability of opening or closing battery cover 12.

Engagement groove 131 may include opening 1311a that is open toward battery cover 12, and forward engagement groove 1311 that allows engagement claw 164 to move backward in housing space 110. Engagement groove 131 may further include backward engagement groove 1312 that is connected to forward engagement groove 1311 on a back side in housing space 110, and that allows engagement claw 164 to move in a rotation direction of battery cover 12 in housing space 110.

This configuration enables battery cover 12 to be opened and closed by two operations of pushing battery cover 12 backward and rotating battery cover 12 in the rotation direction. That is, battery cover 12 can be prevented from coming off from body 11 while opening and closing operation of battery cover 12 is simplified.

First backward wall part 13121 positioned facing battery cover 12 and second backward wall part 13122 positioned backward in housing space 110 may define both sides in the longitudinal direction of battery 7 in backward engagement groove 1312. First forward wall part 13111 connected to first backward wall part 13121 and second forward wall part 13112 connected to second backward wall part 13122 may define both sides in the rotation direction of battery cover 12 in forward engagement groove 1311. First forward wall part 13111 may be inclined in a direction away from first backward wall part 13121 toward opening 1311a.

This configuration causes engagement claw 164 to move along first forward wall part 13111 inclined when battery cover 12 is closed, and thus enables engagement claw 164 to be introduced into backward engagement groove 1312. That is, first forward wall part 13111 can have a function of leading (i.e., guiding) engagement claw 164 to backward engagement groove 1312. Thus, when engagement claw 164 is introduced into forward engagement groove 1311, engagement claws 164 can be then engaged with backward engagement groove 1312 (i.e., battery cover 12 can be prevented from coming off from body 11) only by rotating battery cover 12 to one side in the rotation direction (i.e., in the closing direction) without pushing battery cover 12 backward. When first forward wall part 13111 has a function of leading (i.e., guiding) engagement claw 164 into backward engagement groove 1312 as described above, battery cover 12 can be closed more easily.

First backward wall part 13121 positioned facing battery cover 12 and second backward wall part 13122 positioned backward in housing space 110 may define both sides in the longitudinal direction of battery 7 in backward engagement groove 1312. Further, first forward wall part 13111 connected to first backward wall part 13121 and second forward wall part 13112 connected to second backward wall part 13122 may define both sides in the rotation direction of battery cover 12 in forward engagement groove 1311. Second forward wall part 13112 may be inclined in a direction away from second backward wall part 13122 toward opening 1311a.

This configuration causes engagement claw 164 to move along second forward wall part 13112 which has been inclined when battery cover 12 is opened, and thus enables engagement claw 164 to move toward opening 1311a. That is, second forward wall part 13112 can have a function of leading (i.e., guiding) engagement claw 164 toward opening 1311a. Thus, battery cover 12 can be removed from body 11 only by rotating battery cover 12 to the other side in the rotation direction (i.e., the opening direction). As described above, when second forward wall part 13112 has a function of leading (i.e., guiding) engagement claw 164 toward opening 1311a, battery cover 12 can be opened more easily.

Cover body 16 may include attachment groove 163 in which O-ring 19 (i.e., an example of seal member) is attached. Attachment groove 163 may be positioned behind the engagement part in housing space 110 in the attachment state.

As described above, when the gap between battery cover 12 and body 11 is sealed behind the engagement part engaged with the engaged part, a liquid can be more reliably prevented from entering a part where battery 7 is housed in housing space 110.

Sealing rib 141 which comes into contact with battery cover 12 in the attachment state may be formed over the entire circumference of peripheral part 14 around opening 110a of housing space 110 in body 11.

This configuration causes the gap between battery cover 12 and body 11 to be sealed by sealing rib 141 outside the engagement part and the engaged part when battery cover 12 is attached to body 11. Thus, a liquid can be prevented from entering the engagement part in the shape of a groove or the engaged part in the shape of a groove. As a result, when battery cover 12 is removed from body 11, the liquid accumulated in the engagement part in the shape of a groove or the engaged part in the shape of a groove can be prevented from flowing backward in housing space 110. As described above, the liquid can be prevented from entering housing space 110 more reliably due to the double sealing structure.

Cover body 16 may be composed of one component.

This configuration enables reduction in number of components, and thus enables a simple configuration and cost reduction.

Cover body 16 may be provided with rib 16211 that prevents contact with terminals (i.e., negative electrode terminal 17 or positive electrode terminal 18) of battery 7 when battery 7 is inserted reversely in housing space 110.

This configuration prevents energization of battery 7 when battery 7 is inserted reversely, and thus enables preventing malfunction of oral cavity cleaning device 1 more reliably.

Battery cover 12 may be attached below to body 11 in a normal state.

This configuration causes battery cover 12 to be disposed downward when oral cavity cleaning device 1 is normally placed, and thus enables battery cover 12 to be less likely to be visible. As a result, oral cavity cleaning device 1 can be improved in appearance quality, so that design properties can be improved. In particular, when oral cavity cleaning device 1 is a telescopic type, battery cover 12 can be hidden in tank 2, and thus the design properties can be further improved.

Oral cavity cleaning device 1 includes device body 3 in which body 11 is incorporated, and cover body 16 may include at least a part that protrudes from device body 3 as viewed along rotation axis C of cover body 16 while battery cover 12 is rotated to switch from the attachment state to the non-attachment state. When the whole of battery cover 12 exists inside device body 3 as viewed along rotation axis C of cover body 16 while cover body 16 is rotated between the attachment state and the non-attachment state, a gap between battery cover 12 and body 11 may be sealed by O-ring 19 (i.e., an example of seal member).

This configuration causes the gap between battery cover 12 and body 11 to be sealed even when battery cover 12 is not securely attached to body 11 (i.e., in a half-open state), and thus enables the liquid to be more reliably prevented from entering housing space 110.

Battery cover 12 may be disposed with its outer periphery along the outer periphery of bottom surface 3131 of device body 3 in the attachment state.

This configuration enables battery cover 12 to be prevented from unnaturally protruding from device body 3 when battery cover 12 is attached to body 11, and thus enables improving appearance quality of oral cavity cleaning device 1 to improve design properties of oral cavity cleaning device 1.

Oral cavity cleaning device 1 may include tank 2 that is detachably attached to device body 3 and capable of storing liquid. Thus, when at least a part of battery cover 12 protrudes from device body 3 as viewed along rotation axis C of cover body 16, tank 2 may be prevented from being attached to device body 3.

Preventing device body 3 from being inserted into tank 2 when battery cover 12 is forgotten to be closed (i.e., when housing space 110 is in an unsealed state) enables oral cavity cleaning device 1 to be prevented from being used in a state where a liquid is permitted to enter housing space 110. That is, when tank 2 is attached to device body 3 (i.e., when oral cavity cleaning device 1 is brought into a usable state), housing space 110 is sealed to enable preventing the liquid from entering housing space 110. Thus, the liquid can be prevented from entering housing space 110 during use of oral cavity cleaning device 1.

Battery cover 12 may be housed in tank 2 in a state where tank 2 is attached to device body 3.

This configuration enables battery cover 12 to be hidden in tank 2, so that oral cavity cleaning device 1 can be improved in appearance quality to enable improvement in design properties. Battery cover 12 is housed in tank 2, so that dirt (e.g., as food debris) generated during use of oral cavity cleaning device 1 can be prevented from adhering to battery cover 12. Battery cover 12 is housed in tank 2, so that accumulation of dust on battery cover 12 when oral cavity cleaning device 1 is housed (e.g., when the oral cavity cleaning device is not in use and placed on a wash basin or the like) also can be prevented.

Tube 5 through which liquid in tank 2 can be supplied into device body 3 may be attached to device body 3. Tank 2 may be supported by device body 3 in a slidable manner between a housed state in which device body 3 is housed in tank 2 and a pulled-out state in which device body 3 is pulled out from tank 2. In the housed state, tube housing space 2b in which tube 5 is housed may be formed between tank 2 and device body 3. Operation rib 1612 is positioned close to the center of tube housing space 2b in the housed state, and tube 5 may be positioned outside operation rib 1612 in tube housing space 2b.

This configuration enables tube 5 to be wound outside operation rib 1612 (i.e., on an outer peripheral side) when tube 5 is housed in tube housing space 2b in a state where device body 3 is in the housed state. That is, tube 5 can be wound with a relatively large radius of curvature. As a result, tube 5 is prevented from being crushed or broken.

Operation rib 1612 may have protrusion height L1 smaller than diameter D1 of tube 5.

This configuration enables operation rib 1612 to be more reliably housed in tube housing space 2b when device body 3 is in the housed state, so that tube 5 is prevented from being crushed or broken.

Operation rib 1612 may have protrusion height L1 within a range which is eual to or greater than 3.5 mm and is equal to or less than 4.5 mm.

This configuration enables preventing interference with a mating component (e.g., tube 5 existing together in tube housing space 2b) while suppressing deterioration of operability of operation rib 1612. That is, protrusion height L1 of operation rib 1612 can be set to a protrusion height that can not only prevent interference with the mating component but also enhance operability.

Nozzle 4 that discharges a liquid supplied into device body 3 may be attached to device body 3 on a side opposite to a side on which battery cover 12 is attached.

This configuration enables the liquid discharged from nozzle 4 to be more reliably prevented from splashing on battery cover 12 during use of oral cavity cleaning device 1.

### [Others]

Although the contents of the oral cavity cleaning device according to the present disclosure have been described above, the above-described exemplary embodiment and the modification thereof are intended to illustrate the technique in the present disclosure. Thus, various changes, replacements, additions, omissions, and the like can be made within the scope of claims or equivalents thereof.

For example, an oral cavity cleaning device can be provided in which the configurations described in the above-mentioned exemplary embodiment and the modification thereof are appropriately combined.

Although oral cavity cleaning device 1 with a telescopic tank has been described in the above-mentioned exemplary embodiment and the modification thereof by way of example, in which device body 3 is brought into the pulled-out state by rotating device body 3 relatively to tank 2, the present disclosure is not limited thereto. For example, an oral cavity cleaning device with a telescopic tank can be provided in which device body 3 is pulled in a sliding direction to bring device body 3 into a pulled-out state.

Various types of an oral cavity cleaning device may be available as long as being a battery replaceable device capable of replacing battery 7 as a driving source. That is, an oral cavity cleaning device assuming that a dry battery, a rechargeable battery, or the like is replaced with a new battery when the battery reaches its end of life may be available. For example, not only a device using a dry battery, but also a device using a rechargeable battery is available. The device using a rechargeable battery may be configured to charge the rechargeable battery after being detached from the device, or to charge the rechargeable battery housed in the device.

Additionally, specifications (shape, size, layout, and the like) of the device body, the tank, and other details can be changed as appropriate.

### INDUSTRIAL APPLICABILITY

As described above, the oral cavity cleaning device according to the present disclosure can more easily replace the battery, and thus can be used for various kinds of an oral cavity cleaning device, including home and business uses.

### REFERENCE MARKS IN THE DRAWINGS

- 1: oral cavity cleaning device
- 10: battery housing
- 11: body
- 110: housing space
- 110a: opening
- 111: battery base
- 12: battery cover
- 13: inner wall
- 131: engagement groove
- 1311: forward engagement groove
- 1311a: opening
- 13111: first forward wall part
- 13112: second forward wall part
- 1312: backward engagement groove
- 13121: first backward wall part
- 13122: second backward wall part
- 14: peripheral part
- 141: sealing rib
- 15: negative electrode terminal holder
- 151: attachment part
- 152: boss
- 16: cover body
- 161: flat plate part
- 161a: outer surface
- 161b: inner surface
- 1611: outer peripheral surface
- 1612: operation rib
- 162: insertion part
- 1621: positive electrode terminal attachment part
- 1621a: distal end surface
- 16211: rib
- 163: attachment groove
- 164: engagement claw
- 17: negative electrode terminal
- 171: spring part
- 172: leaf spring
- 1721: battery contact part
- 17211: protrusion
- 17212: positional displacement prevention part
- 173: coil spring
- 174: terminal body
- 18: positive electrode terminal
- 181: energization part
- 19: O-ring
- 191: outer periphery
- 2: tank
- 2a: reservoir
- 2b: tube housing space
- 21: tubular body
- 211: pull-out recess
- 212: marked recess
- 213: drying hole
- 214: liquid supply hole
- 2121: inclined surface
- 22: bottom wall
- 221: bottom wall body
- 222: peripheral wall
- 2221: packing
- 2222: housing recess
- 24: liquid supply lid
- 241: hinge
- 242: packing
- 3: device body
- 31: housing
- 311: top wall
- 3111: nozzle attachment part
- 312: peripheral wall
- 313: bottom wall
- 3131: bottom surface
- 3132: housing recess
- 3133: tube attachment part
- 314: large-diameter part
- 3141: button
- 3142: power supply switch
- 3143: nozzle housing
- 3144: pull-out protrusion
- 3145: packing
- 3146: marked protrusion
- 315: small-diameter part
- 3151: housing protrusion
- 32: flow path
- 321: suction path
- 322: discharge path
- 323: pump
- 3231: motor
- 3232: cam
- 3233: piston
- 3234: pump chamber
- 4: nozzle
- 5: tube
- 6: coil spring
- 7: battery
- 71: negative electrode
- 72: positive electrode
- C: rotation axis
- C1: rotation center
- D1: diameter of tube 5
- L1: protrusion height

## Claims

1. An oral cavity cleaning device being a battery replaceable device driven by a battery that is replaceable, the oral cavity cleaning device comprising:
a body comprising a housing space in which the battery is housed;
a battery cover that closes an opening of the housing space; and
a seal member that seals a gap between the battery cover and the body,
wherein
the battery cover comprises a cover body that is rotatably attached to the body,
the oral cavity cleaning device is configured in such a manner that the cover body is rotated to switch between an attachment state in which the seal member seals the gap between the battery cover and the body while closing the opening of the housing space and a non-attachment state in which the sealing of the gap between the battery cover and the body using the seal member is released and the battery cover is detachable from the body,
the battery cover comprises a terminal that is attached to the cover body and is in contact with the battery in the attachment state to be electrically connected to the battery, and
the cover body comprises an operation rib for performing a switching operation between the attachment state and the non-attachment state of the battery cover by being hooked by a finger.

2. The oral cavity cleaning device according to Claim 1, wherein
the operation rib protrudes along a longitudinal direction of the battery.

3. The oral cavity cleaning device according to Claim 1 or 2, wherein
the operation rib is provided at a position eccentric from a rotation center of the cover body.

4. The oral cavity cleaning device according to any one of Claims 1 to 3,
wherein
the cover body comprises an attachment groove in which the seal member is to be attached, and
the seal member is attached into the attachment groove.

5. The oral cavity cleaning device according to Claim 4, wherein
the operation rib is positioned outside an outer periphery of the seal member.

6. The oral cavity cleaning device according to any one of Claims 1 to 5,
wherein
the cover body comprises an engagement part that is releasably engaged with an engaged part formed in the body and that prevents the cover body from coming off from the body in the attachment state.

7. The oral cavity cleaning device according to Claim 6, wherein
the engagement part is an engagement claw, and
the engaged part is an engagement groove.

8. The oral cavity cleaning device according to Claim 7, wherein
the operation rib is positioned outside the engagement claw with respect to a rotation center of the battery cover that is rotated to switch between the attachment state and the non-attachment state.

9. The oral cavity cleaning device according to Claim 7 or 8, wherein
the engagement groove comprises:
a forward engagement groove having an opening that is open toward battery cover, the forward engagement groove allowing the engagement claw to move backward in the housing space; and
a backward engagement groove connected to the forward engagement groove on a back side in the housing space, the backward engagement groove allowing the engagement claw to move in a rotation direction of the battery cover in the housing space.

10. The oral cavity cleaning device according to Claim 9, wherein,
the backward engagement groove comprises a first backward wall part positioned facing the battery cover and a second backward wall part positioned backward in the housing space, the first backward wall part and the second backward wall part defining both sides of the battery in the longitudinal direction of the battery,
the forward engagement groove comprises a first forward wall part connected to the first backward wall part and a second forward wall part connected to the second backward wall part, the first forward wall part and the second forward wall part defining both sides of the battery cover in the rotation direction of the battery cover, and
the first forward wall part is inclined in a direction away from the first backward wall part toward the opening.

11. The oral cavity cleaning device according to Claim 9 or 10, wherein,
the backward engagement groove comprises a first backward wall part positioned facing the battery cover and a second backward wall part positioned backward in the housing space, the first backward wall part and the second backward wall part defining both sides of the battery in the longitudinal direction of the battery,
the forward engagement groove comprises a first forward wall part connected to the first backward wall part and a second forward wall part connected to the second backward wall part, the first forward wall part and the second forward wall part defining both sides of the battery cover in the rotation direction of the battery cover, and
the second forward wall part is inclined in a direction away from the second backward wall part toward the opening.

12. The oral cavity cleaning device according to any one of Claims 6 to 11, wherein
the cover body comprises an attachment groove in which the seal member is attached, and
the attachment groove is positioned behind the engagement part in the housing space in the attachment state.

13. The oral cavity cleaning device according to any one of Claims 6 to 12,
wherein
the body comprises a peripheral part around the opening of the housing space, the peripheral part being provided with a sealing rib over an entire circumference of the peripheral part, the sealing rib being in contact with the battery cover in the attachment state.

14. The oral cavity cleaning device according to any one of Claims 1 to 13,
wherein the cover body is composed of one component.

15. The oral cavity cleaning device according to any one of Claims 1 to 14,
wherein
the cover body is provided with a rib that prevents contact with the terminal of the battery when the battery is inserted reversely in the housing space.

16. The oral cavity cleaning device according to any one of Claims 1 to 15,
wherein the battery cover is attached below to the body.

17. The oral cavity cleaning device according to Claim 16, wherein
the body comprises a device body incorporated,
the cover body comprises at least a part that protrudes from the device body as viewed along a rotation axis of the cover body while the battery cover is rotated to switch from the attachment state to the non-attachment state, and
when the battery cover entirely exists inside the device body as viewed along the rotation axis of the cover body while the cover body is rotated between the attachment state and the non-attachment state, the gap between the battery cover and the body is sealed by the seal member.

18. The oral cavity cleaning device according to Claim 17, wherein
the battery cover is disposed with an outer periphery along an outer periphery of a bottom surface of the device body in the attachment state.

19. The oral cavity cleaning device according to Claim 17 or 18, further comprising a tank that is detachably attached to the device body and stores liquid,
wherein
when at least a part of the battery cover protrudes from the device body as viewed along the rotation axis of the cover body, the tank is prevented from being attached to the device body.

20. The oral cavity cleaning device according to Claim 19, wherein
the battery cover is housed in the tank in a state where the tank is attached to the device body.

21. The oral cavity cleaning device according to Claim 19 or 20, wherein
a tube through which the liquid in the tank is configured to be supplied into the device body is attached to the device body,
the tank is supported by the device body in a slidable manner between a housed state in which the device body is housed in the tank and a pulled-out state in which the device body is pulled out from the tank,
the tube is housed in a tube housing space formed between the tank and the device body in the housed state, and
the operation rib is positioned close to a center of the tube housing space, and
the tube is positioned outside the operation rib in the tube housing space in the housed state.

22. The oral cavity cleaning device according to Claim 21, wherein
the operation rib has a protrusion height smaller than a diameter of the tube.

23. The oral cavity cleaning device according to any one of Claims 1 to 22,
wherein the operation rib has a protrusion height within a range which is equal to or greater than 3.5 mm and is equal to or less than 4.5 mm.

24. The oral cavity cleaning device according to any one of Claims 1 to 23,
wherein
the body comprises a device body incorporated, and
the device body is provided with a nozzle that is attached to the device body on a side opposite to a side on which the battery cover is attached and that discharges liquid supplied into the device body.
